(19) Europäisches Patentamt
European Patent Office
Office européen des brevets

(11) **EP 2 690 908 A1**

(12) **EUROPEAN PATENT APPLICATION**
published in accordance with Art. 153(4) EPC

(43) Date of publication:
**29.01.2014 Bulletin 2014/05**

(21) Application number: **11861862.8**

(22) Date of filing: **22.03.2011**

(51) Int Cl.:
*H04W 36/30* (2009.01)    *H04W 36/22* (2009.01)
*H04W 92/20* (2009.01)

(86) International application number:
**PCT/JP2011/056739**

(87) International publication number:
**WO 2012/127600 (27.09.2012 Gazette 2012/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Fujitsu Limited**
**Kawasaki-shi, Kanagawa 211-8588 (JP)**

(72) Inventor: **SUGA, Junichi**
**Kawasaki-shi**
**Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **WIRELESS BASE STATION, WIRELESS COMMUNICATION SYSTEM, COMMUNICATION CONTROL METHOD, AND WIRELESS TERMINAL**

(57)    When a wireless base station determines that a wireless terminal connected to the wireless base station is handed over to an adjacent wireless base station based on a handover condition for the adjacent wireless base station and the wireless base station determines that the adjacent wireless base station hands over the wireless terminal to the other adjacent wireless base station based on a handover condition between the adjacent wireless base stations, the wireless base station hands over the wireless terminal to the other adjacent wireless base station.

FIG. 5

**Description**

FIELD

The embodiment discussed herein is directed to a wireless base station, a wireless communication system, a communication control method, and a wireless terminal.

BACKGROUND

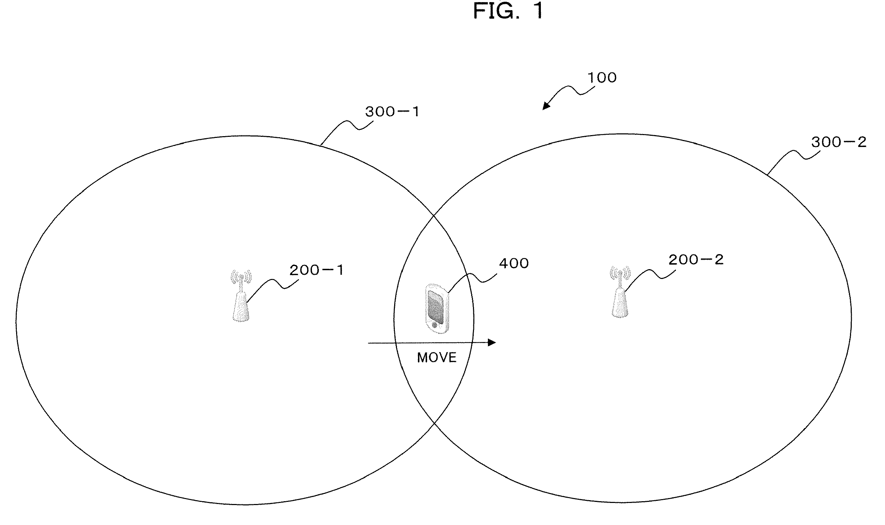

In recent years, services of Long Term Evolution (LTE) standardized in 3rd Generation Partnership Project (3GPP) have been developed worldwide. As exemplified in FIG. 1, a wireless communication system suggested in LTE or the like includes a plurality of wireless base stations 200-1 and 200-2 and at least one wireless terminal 400.

In a wireless communication system 100, handover is executed when the wireless terminal 400 is moved from a wireless area 300-1 provided by the wireless base station 200-1 to a wireless area 300-2 provided by the wireless base station 200-2 adjacent to the wireless base station 200-1. The wireless areas 300-1 and 300-2 conceptually include, for example, cells or sectors provided by the wireless base stations 200-1 and 200-2, but are simply referred to as cells below in some cases to facilitate the description.

At this time, the wireless terminal 400 transmits, to the wireless base station 200-1 serving as a handover source, a measurement notification (Measurement Report) based on a reception power or a reception quality from the wireless base station 200-1 and reception power or reception quality from the wireless base station 200-2.

For example, the wireless base station 200-1 can start a handover process using the fact that the wireless base station 200-1 receives the above-described Measurement Report from the wireless terminal 400 as a trigger.

Specifically, for example, after the wireless base station 200-1 receives the above-described Measurement Report from the wireless terminal 400, the wireless base station 200-1 starts a sequence of the handover process and determines a cell of handover destination based on various kinds of information included in Measurement Report. In the example illustrated in FIG. 1, the handover from the cell 300-1 serving as a serving cell to the cell (adjacent cell) 300-2 adjacent to the cell 300-1 is determined. That is, in the example illustrated in FIG. 1, the adjacent cell 300-2 is determined as a target cell of the handover.

The wireless base station 200-1 transmits, to the wireless terminal 400, a message regarding a handover instruction which includes information or the like regarding the target cell 300-2 or the wireless base station 200-2 serving as the handover destination.

The wireless terminal 400 receiving the message from the wireless base station 200-1 changes the serving cell from the cell 300-1 to the adjacent cell 300-2.

Incidentally, a condition under which the wireless terminal 400 performs measurement on the cell 300-1 or the adjacent cell 300-2, or a condition under which the wireless terminal 400 makes Measurement Report are set (notified) in advance in the wireless base stations 200-1 and 200-2 to the wireless terminal 400.

For example, the wireless terminal 400 measures the reception power or the reception quality of the cell 300-1, or the reception power or the reception quality of the adjacent cell 300-2 regularly or irregularly. When the result of the measurement satisfies a condition in which Measurement Report is made, the wireless terminal 400 transmits Measurement Report to the wireless base station 200-1 providing the cell 300-1. Measurement Report includes, for example, information regarding the adjacent cell 300-2 satisfying the condition under which Measurement Report is made.

Condition Expression (1) of Event A3 which is one of the transmission (notification) conditions of Measurement Report suggested in LTE or the like is as follows.

[Expression 1]

$$Mn > Ms + HOm\arg in \qquad \cdots \quad (1)$$

In condition Expression (1) above, Mn is a reception power [dBm] or a reception quality [dB] of the adjacent cell 300-2 and Ms is a reception power [dBm] or a reception quality [dB] of the serving cell 300-1. Further, HOmargin is a margin value [dB] between Mn and Ms.

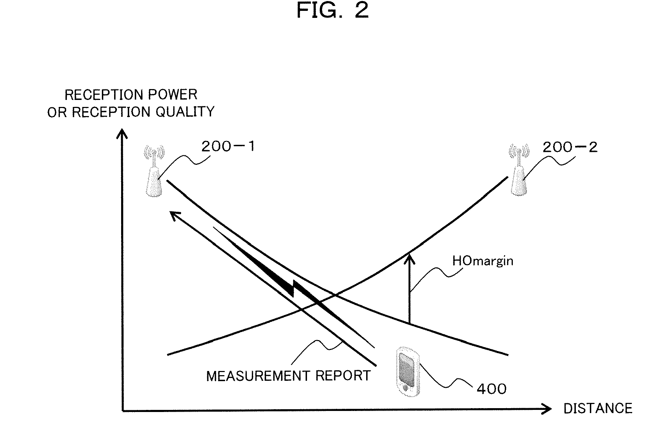

FIG. 2 illustrates an example in which the wireless terminal 400 transmits Measurement Report to the wireless base station 200-1. In FIG. 2, the vertical axis represents reception power or reception quality and the horizontal axis represents a positional relation (distance) between each of the wireless base stations 200-1 and 200-2 and the wireless terminal 400.

As illustrated in FIG. 2, for example, the wireless terminal 400 measures each of the reception power or the reception quality (Mn) of the adjacent cell 300-2 and the reception power or the reception quality (Ms) of the serving cell 300-1 and compares Mn to Ms. When it is determined that a difference between Mn and Ms is greater than predetermined HOmargin, the wireless terminal 400 transmits Measurement Report to the wireless base station 200-1 providing the cell 300-1. A value of HOmargin in condition Expression (1) described above may be set, for example, for each adjacent cell 300-2. That is, when the plurality of cells 300-2 adjacent to the serving cell 300-1 are present, a different value of HOmargin can be set for each of the adjacent cells 300-2.

As a technology regarding a handover process, there is known a method of executing a handoff process by changing a threshold value according to the quality of a wireless line, when a mobile station receives a reference signal with a level exceeding the set threshold value from another wireless base station (see Patent Literature 1).

There is also known a method of selecting a base station whose a radio wave is likely to be intensified from now rather than a base station whose a radio wave is the strongest by selecting a base station of which the intensity of a radio wave is the maximum in an extension direction of a movement trajectory of a cellular phone (see Patent Literature 2).

A mobile communication system that executes handoff in consideration of a traveling direction of a mobile station is known (see Patent Literature 3).

There is known a method of performing exact zone determination by measuring a reception electric field level from a neighborhood base station using another frequency band, while a mobile station performs communication using a given frequency band, and then performing correction on the reception electric field level from the base station during communication based on a difference between the frequency bands (see Patent Literature 4).

In 3GPP, a review of Self-Organizing Networks (SON) designed to realize efficiency of an administration task of an operator (administrator) by automatically setting various wireless parameters and performing optimization is in progress for LTE (see Non Patent Literature 1).

As an use case of SON, Mobility Load Balancing (MLB) is considered in which parameters of a transmission condition of Measurement Report described above are adjusted between adjacent cells and load of a CPU use ratio, a wireless resource use ratio, or the like between base stations is uniform.

CITATION LIST

PATENT LITERATURE

[Patent Literature 1] Japanese Laid-open Patent Publication No. 2001-78242
[Patent Literature 2] Japanese Laid-open Patent Publication No. 2007-318361
[Patent Literature 3] Japanese National Publication of International Patent Application No. 2002-503435
[Patent Literature 4] Japanese Laid-open Patent Publication No. 6-350515

NON PATENT LITERATURE

[Non Patent Literature 1] 3GPP TR 36.902 V9.2.0

SUMMARY OF THE INVENTION

PROBLEMS TO BE SOLVED BY THE INVENTION

In a wireless communication system using the MLB, when the load of the wireless base station 200-1 providing the serving cell 300-1 is greater than a predetermined threshold value, a transmission (notification) condition of Measurement Report from the wireless terminal 400 to the wireless base station 200-1 providing the serving cell 300-1 can be changed.

For example, when the load of the wireless base station 200-2 providing the adjacent cell 300-2 is less than the predetermined threshold value, the value of HOmargin included in the handover condition at the time of the handover from the cell 300-1 to the cell 300-2 may be changed (updated) so as to be small.

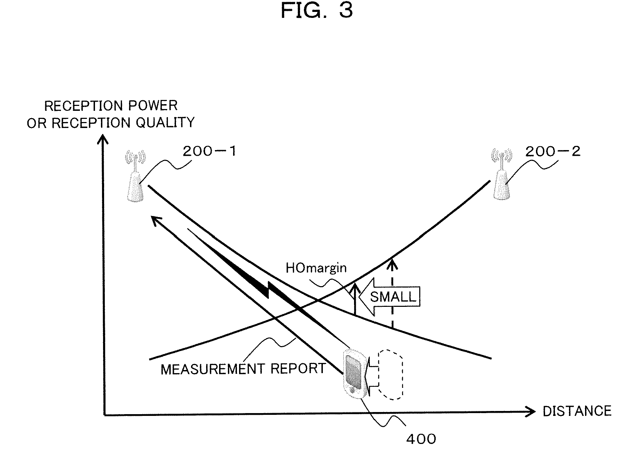

In this case, as illustrated in FIG. 3, the position of the wireless terminal 400 at a transmission timing of Measurement Report after the change of HOmargin is closer to the side of the wireless base station 200-1 than the position of the wireless terminal 400 at a transmission timing of Measurement Report before the change of HOmargin.

Even in the example illustrated in FIG. 3, the wireless base station 200-1 receiving Measurement Report from the wireless terminal 400 starts a handover process by determining the adjacent cell 300-2 as a target cell using the fact that the wireless base station 200-1 receives Measurement Report as a trigger, as in the example illustrated in FIG. 2.

That is, when the value of HOmargin is set to be small, the start position of the handover of the wireless terminal 400 from the serving cell 300-1 to the cell 300-2 is shifted to the side of the wireless base station 200-1 providing the serving cell 300-1 more than the start position of the handover of the wireless terminal 400 from the serving cell 300-1 to the cell 300-2 before the change of HOmargin.

Thus, since a handover timing of the wireless terminal 400 located between the wireless base stations 200-1 and 200-2 can be advanced, it is possible to reduce the load of the wireless base station 200-1 providing the cell 300-1.

On the other hand, in the MLB, when the cell 300-2 is set to serve a serving cell, the value of HOmargin for the cell 300-1 provided by the wireless base station 200-1 adjacent to the wireless base station 200-2 providing the cell 300-2 is changed (updated) so as to increase.

Thus, the start position of the handover of the wireless terminal 400 from the serving cell 300-2 to the cell 300-1 can be shifted to the side of the wireless base station 200-1 more than the start position of the handover of the wireless terminal 400 from the serving cell 300-2 to the cell 300-1 before the change of HOmargin. As a result, since the handover timing of the wireless terminal 400 from the serving cell 300-2 to the cell 300-1 can be retarded, it is possible to further reduce the load of the wireless base station 200-1 providing the cell 300-1.

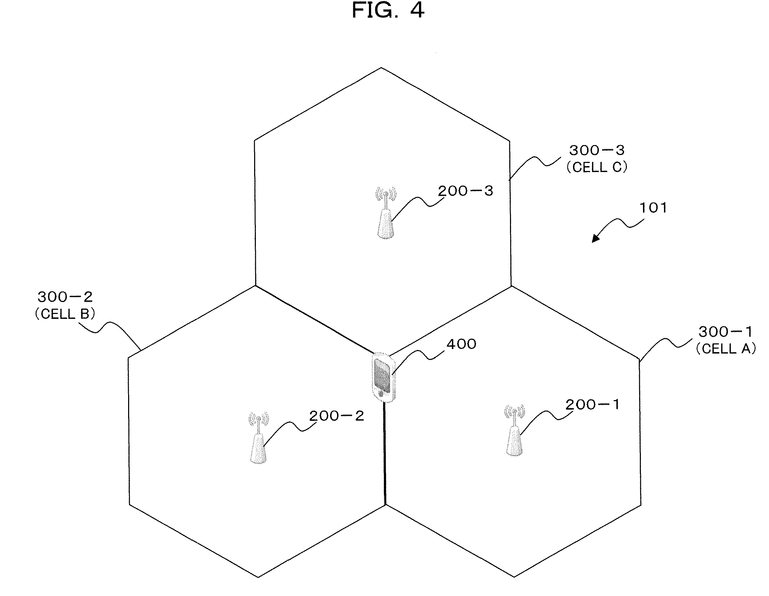

As exemplified in FIG. 4, a wireless communication system including a plurality of cells adjacent to each other will be considered. A wireless communication system 101 illustrated in FIG. 4 includes, for example, a plurality of wireless base stations 200-1, 200-2, and 200-3 and at least one wireless terminal 400. The wireless base station 200-1 provides a cell 300-1 (hereinafter, also simply referred to as a cell A), the wireless base station 200-2 provides a cell 300-2 (hereinafter, also simply referred to as a cell B), and the wireless base station 200-3 provides a cell 300-3 (hereinafter, also simply referred to as a cell C). The cells A, B, and C are adjacent to each other, as described above.

In such a wireless communication system 101, when the load of the wireless base station 200-2 providing the cell B is greater than a predetermined threshold value, the value of HOmargin can be changed so that the wireless terminal 400 connected to the cell B can be easily handed over from the cell B to the cell C or from the cell B to the cell A.

At this time, the environment of the cell C and the environment of the cell A are different from each other in some cases from the viewpoint of the cell B. For example, the load of the wireless base station 200-3 providing the cell C may be different from the load of the wireless base station 200-1 providing the cell A.

In this case, the value of HOmargin used in the transmission condition of Measurement Report which is a trigger of the handover from the cell B to the cell C and the value of HOmargin used in the transmission condition of Measurement Report which is a trigger of the handover from the cell B to the cell A may be set to different values in some cases.

For example, when the load of the wireless base station 200-3 is less than the load of the wireless base station 200-1, the value of HOmargin used in the transmission condition of Measurement Report which is a trigger of the handover from the cell B to the cell C can be set to be smaller than the value of HOmargin used in the transmission condition of Measurement Report which is the trigger of the handover from the cell B to the cell A, so that more load can be processed by the wireless base station 200-3.

Thus, as in the wireless communication system 101 exemplified in FIG. 4, a bias (variation) may be caused among the values of HOmargin in the cells A, B, and C adjacent to each other.

For example, in the example illustrated in FIG. 4, a case will be considered in which the load of the wireless base station 200-2 providing the cell B is greater than the predetermined threshold value and X [dB] is set to be small before and after the value of HOmargin used in the transmission condition of Measurement Report which is the trigger of the handover from the cell B to the cell C is changed. To facilitate the description, in the example illustrated in FIG. 4, it is assumed that the value of HOmargin used in the transmission condition of Measurement Report which is the trigger of the handover from the cell B to the cell A is not changed (updated).

At this time, a wireless terminal (not illustrated) located between the cells B and C and currently connected to the wireless base station 200-1 [sic, correctly "200-2"] providing the cell B actively executes the handover to the cell C.

On the other hand, the wireless terminal 400 located between the cells B and A and currently connected to the wireless base station 200-3 [sic, correctly "200-1"] providing the cell A transmits Measurement Report to the wireless base station 200-1, when the transmission condition of Measurement Report which is the trigger of the handover from the cell A to the cell B is satisfied.

The wireless base station 200-1 receiving Measurement Report from the wireless terminal 400 determines the cell B as a target cell and starts the handover process from the cell A to the cell B. The wireless terminal 400 receiving a message of a handover instruction from the wireless base station 200-1 executes the handover from the cell A to the cell B to make connection to the wireless base station 200-2.

However, as described above, when the load of the wireless base station 200-2 providing the cell B is greater than the predetermined threshold value, the value of HOmargin used in the transmission condition of Measurement Report which is the trigger of the handover from the cell B to the cell C is changed so that the handover from the cell B to the cell C is prompted.

As a result, there is a probability that the wireless terminal 400 executing the handover from the cell A to the cell B satisfies the transmission condition of Measurement Report which is the trigger of the handover from the cell B to the cell C immediately after the handover from the cell A to the cell B and executes handover from the cell B to the cell C continuously after the handover from the cell A to the cell B.

As described above, when there is the variation between the values of HOmargin in the cells A to C adjacent to each other, for example, the wireless terminal 400 executes the handover from the cell B to the cell C continuously immediately after the wireless terminal 400 executes the handover from the cell A to the cell B. As a result, the load relevant to the handover process in the wireless communication system 101 increases.

Instantaneous interruption caused by the handover process may easily occur, and thus may have an adverse influence on communication in some cases.

An object of the present invention is to reduce generation of handover and to reduce load of a wireless communication system.

Another object of the present invention is to suppress the generation of the handover and thus reduce generation of instantaneous interruption.

Still another object of the present invention is to obtain operational advantages which are not obtained in the technologies of the related art and result from each configuration suggested in embodiments of the present invention to be described in addition to the above-mentioned objects.

MEANS TO SOLVE THE PROBLEMS

(1) According to a first aspect of the invention, there is provided a wireless base station including: a storage unit that stores a handover condition for an adjacent wireless base station, which is a condition under which the wireless base station hands over a wireless terminal connected to the wireless base station to the adjacent wireless base station adjacent to the wireless base station, and a handover condition between adjacent wireless base stations, which is a condition under which the adjacent wireless base station hands over the wireless terminal connected to the adjacent wireless base station to another adjacent wireless base station adjacent to the wireless base station and the adjacent wireless base station; and a control unit that hands over a connected wireless terminal which is a wireless terminal connected to the wireless base station to the other adjacent wireless base station, when the control unit determines that the connected wireless terminal is handed over to the adjacent wireless base station based on the handover condition for the adjacent wireless base station and the control unit determines that the adjacent wireless base station hands over the connected wireless terminal to the other adjacent wireless base station based on the handover condition between the adjacent wireless base stations.

(2) According to a second aspect of the invention, there is provided a wireless base station including: a storage unit that stores a handover condition for an adjacent wireless base station, which is a condition under which the wireless base station hands over a wireless terminal connected to the wireless base station to the adjacent wireless base station adjacent to the wireless base station; and a transmission unit that transmits the handover condition for the adjacent wireless base station to another adjacent wireless base station adjacent to the wireless base station and the adjacent wireless base station.

(3) According to a third aspect of the invention, there is provided a wireless communication system that includes at least a wireless base station. The wireless communication system includes: a storage unit that stores a handover condition for an adjacent wireless base station, which is a condition under which the wireless base station hands over a wireless terminal connected to the wireless base station to the adjacent wireless base station adjacent to the wireless base station, and a handover condition between adjacent wireless base stations, which is a condition under which the adjacent wireless base station hands over the wireless terminal connected to the adjacent wireless base station to another adjacent wireless base station adjacent to the wireless base station and the adjacent wireless base station; and a control unit that hands over a connected wireless terminal which is a wireless terminal connected to the wireless base station to the other adjacent wireless base station, when the control unit determines that the connected wireless terminal is handed over to the adjacent wireless base station based on the handover condition for the adjacent wireless base station and the control unit determines that the adjacent wireless base station hands over the connected wireless terminal to the other adjacent wireless base station based on the handover condition between the adjacent wireless base stations.

(4) According to a fourth aspect of the invention, there is provided a wireless communication system that includes at least a wireless base station. The wireless communication system includes: a storage unit that stores a handover condition for an adjacent wireless base station, which is a condition under which the wireless base station hands over a wireless terminal connected to the wireless base station to the adjacent wireless base station adjacent to the wireless base station; and a transmission unit that transmits the handover condition for the adjacent wireless base station to another adjacent wireless base station adjacent to the wireless base station and the adjacent wireless base station.

(5) According to a fifth aspect of the invention, there is provided a method of controlling communication of a wireless communication system including at least a wireless base station. The method includes: storing a handover condition for an adjacent wireless base station, which is a condition under which the wireless base station hands over a wireless terminal connected to the wireless base station to the adjacent wireless base station adjacent to the wireless base station, and a handover condition between adjacent wireless base stations, which is a condition under which the adjacent wireless base station hands over the wireless terminal connected to the adjacent wireless base station to another adjacent wireless base station adjacent to the wireless base station and the adjacent wireless base station; and handing over a connected wireless terminal which is a wireless terminal connected to the wireless base station to the other adjacent wireless base station, when it is determined that the connected wireless terminal is handed over to the adjacent wireless base station based on the handover condition for the adjacent wireless base station and it is determined that the adjacent wireless base station hands over the connected wireless terminal to the other adjacent wireless base station based on the handover condition between the adjacent wireless base stations.

(6) According to a sixth aspect of the invention, there is provided a method of controlling communication of a wireless communication system including at least a wireless  base station. The method includes: storing a handover condition for an adjacent wireless base station, which is a condition under which the wireless base station hands over a wireless terminal connected to the wireless base station to the adjacent wireless base station adjacent to the wireless base station; and transmitting the handover condition for the adjacent wireless base station to another adjacent wireless base station adjacent to the wireless base station and the adjacent wireless base station.

(7) According to a seventh aspect of the invention, there is provided a wireless terminal including: a wireless communication unit that performs wireless communication with a wireless base station to which the wireless terminal is connected; and a control unit that performs handover to another adjacent wireless base station adjacent to the wireless base station and an adjacent wireless base station adjacent to the wireless base station, when the wireless base station, which stores a handover condition for the adjacent wireless base station which is a condition under which the wireless base station to which the wireless terminal is connected hands over the wireless terminal to the adjacent wireless base station and a handover condition between adjacent wireless base stations which is a condition under which the adjacent wireless base station hands over the wireless terminal connected to the adjacent wireless base station to the other adjacent wireless base station, determines to hand over the wireless terminal connected to the wireless base station to the adjacent wireless base station based on the handover condition for the adjacent wireless base station and the wireless base station  determines that the adjacent wireless base station hands over the wireless terminal to the other adjacent wireless base station based on the handover condition between the adjacent wireless base stations.

EFFECT OF THE INVENTION

It is possible to suppress generation of the handover and to reduce the load of the wireless communication system.

Further, it is possible to suppress the generation of the handover and thus reduce occurrence of instantaneous interruption.

BRIEF DESCRIPTION OF DRAWINGS

FIG. 1 is a diagram illustrating a wireless communication system that executes handover;
FIG. 2 is a diagram illustrating a transmission (notification) condition of Measurement Report;
FIG. 3 is a diagram illustrating a transmission (notification) condition of Measurement Report when HOmargin is changed by MLB;
FIG. 4 is a diagram illustrating an example of a wireless communication system including a plurality of cells adjacent to each other;
FIG. 5 is a diagram illustrating an example of a wireless communication system according to an embodiment of the present invention;
FIG. 6 is a diagram illustrating an example of the configuration of a wireless terminal illustrated in FIG. 5;
FIG. 7 is a diagram illustrating an example of the configuration of a wireless base station illustrated in FIG. 5;
FIG. 8 is a diagram illustrating a transmission example of an RRC Connection Reconfiguration message;
FIG. 9 is a diagram illustrating an example of the contents of a Measurement Report Configuration message;
FIG. 10 is a diagram illustrating an example of a relation among MeasObjectMod, ReportConfigMod, and MeasIDMod;
FIG. 11 is a diagram illustrating an example of a Measurement Report Configuration message;
FIG. 12 is a diagram illustrating an example of a processing flow when Measurement Report is transmitted;
FIG. 13 is a diagram illustrating an example of the contents of Measurement Report;
FIG. 14 is a diagram illustrating an example of a sequence of the handover process;
FIG. 15 is a diagram illustrating an example of a table used to determine a target cell;

FIG. 16 is a diagram illustrating an example of a control message transmitted and received between the wireless base stations;

FIG. 17 is a diagram illustrating an example of the contents of a Mobility Change Request message;

FIG. 18 is a diagram illustrating an example of a processing flow of determination of a transmission order of the Mobility Change Request message;

FIG. 19 is a diagram illustrating an example of a control flow when a handover destination is determined;

FIG. 20 is a diagram illustrating an example of a hardware configuration of the wireless terminal; and

FIG. 21 is a diagram illustrating an example of a hardware configuration of the wireless base station.

DESCRIPTION OF EMBODIMENTS

Hereinafter, an embodiment of the present invention will be described with reference to the drawings. The embodiment to be described below is merely an example and there is no intention to exclude various modifications or application of a technology explicitly not described in the embodiment to be described below. That is, the embodiment, of course, can be modified in various ways within the scope of the invention without departing from the gist of the invention.

Embodiment

(1.1) Example of Configuration of Wireless Communication System

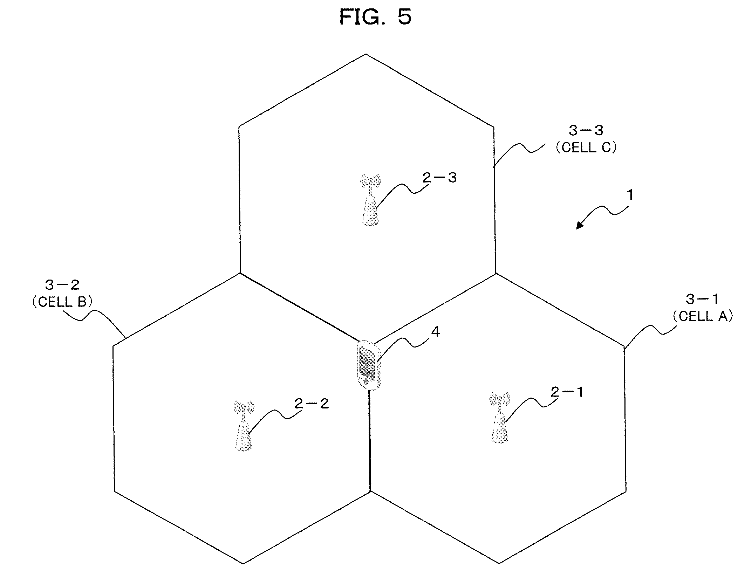

FIG. 5 is a diagram illustrating an example of the configuration of a wireless communication system according to an embodiment. A wireless communication system 1 illustrated in FIG. 5 includes, for example, a plurality of wireless base stations 2-1, 2-2, and 2-3 and at least one wireless terminal 4. Hereinafter, when the wireless base stations 2-1, 2-2, and 2-3 are not distinguished from each other, the wireless base stations 2-1, 2-2, and 2-3 are simply referred to as the wireless base stations 2. The number of wireless base stations 2-1, 2-2, and 2-3 and the number of wireless terminals 4 are not limited to the numbers exemplified in FIG. 5, respectively.

Here, the wireless base stations 2-1, 2-2, and 2-3 provide a first wireless area 3-1, a second wireless area 3-2, and a third wireless area 3-3 adjacent to each other, respectively. The wireless areas 3-1, 3-2, and 3-3 conceptually include cells, sectors, or the like, but are simply referred to as cells below in some cases to facilitate the description. The wireless areas 3-1, 3-2, and 3-3 are referred to as a cell A, a cell B, and a cell C, respectively, below in some cases.

In the example illustrated in FIG. 5, the wireless base stations 2-1, 2-2, and 2-3 form the cells A, B, and C, respectively. However, for example, at least one wireless base station 2 may form a plurality of cells. In the cells A to C, the same wireless frequency may be used or different wireless frequencies may be used. For example, when the wireless frequency used in the cell B is the same as the wireless frequency used in the cell A and the wireless frequency used in the cell B is different from the wireless frequency used in the cell C, there is a probability that a wireless quality can be improved in a method of executing handover between the cells using different wireless frequencies more than in a method of executing handover between the cells using the same wireless frequency. In this case, the handover from the cell B to the cell C is considered to be executed more easily than the handover from the cell B to the cell A.

The wireless base station 2 performs wireless communication with the wireless terminal 4 located within the cell formed by the own wireless base station 2. The wireless terminal 4 can move among the respective cells A to C. For example, when the wireless terminal 4 moves from the cell formed by a given wireless base station 2 to the cell formed by another wireless base station 2, the wireless terminal 4 executes a handover process of switching a serving cell.

In this example, in the wireless communication system 1, for example, the wireless base station 2-1 hands over the wireless terminal 4 from the cell A to the cell C, when the wireless terminal 4 connected to the own wireless base station 2-1 satisfies both of a first handover condition for execution of handover from the cell A to the cell B and a second handover condition for execution of handover from the cell B to the cell C.

Thus, since the handover from the cell A to the cell B can be omitted, it is possible to suppress generation of handover and to reduce load of the wireless communication system 1. Further, it is possible to reduce generation of instantaneous interruption caused in the handover.

Hereinafter, the embodiment will be describing giving an example in which the wireless base station 2-1 performs the above-described handover control. However, the other wireless base stations 2-2 and 2-3 may, of course, perform the same handover control.

(1.2) Example of Configuration of Wireless Terminal 4

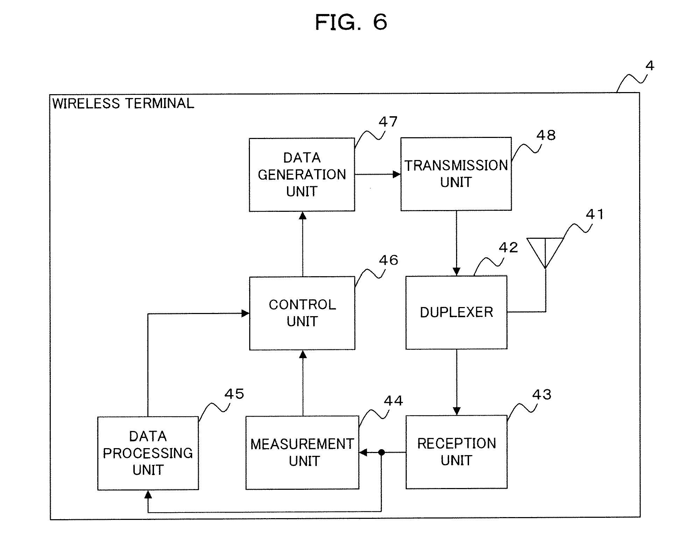

FIG. 6 is a diagram illustrating an example of the configuration of the wireless terminal 4.

The wireless terminal 4 illustrated in FIG. 6 includes, for example, an antenna 41, a duplexer 42, a reception unit 43, a measurement unit 44, a data processing unit 45, a control unit 46, a data generation unit 47, and a transmission unit 48.

The antenna 41 functions as a reception antenna that receives a wireless signal from the wireless base station 2-1 forming the cell A which is a serving cell to which the wireless terminal 4 is connected and also functions as a transmission antenna that transmits a wireless signal to the wireless base station 2-1. That is, the antenna 41 of this example is configured to commonly serve as the reception antenna and the transmission antenna by using the duplexer 42. FIG. 6 merely illustrates the example of the configuration of the wireless terminal 4. For example, when the duplexer 42 is not used, the wireless terminal 4 may separately include a transmission antenna and a reception antenna.

The antenna 41 may transmit and receive a wireless signal between the other wireless base stations 2-2 and 2-3 adjacent to the wireless base station 2-1 and the own wireless terminal 4.

The reception unit 43 performs a predetermined reception process on the wireless signal received by the antenna 41. The reception process includes, for example, a down-conversion process, an analog/digital conversion process, a demodulation process, and a decoding process. The signal subjected to the reception process by the reception unit 43 is output to the measurement unit 44 and the data processing unit 45.

The measurement unit 44 measures and calculates a reception power or a reception quality of the wireless base station 2-1 based on the signal received from the wireless base station 2-1. The measurement unit 44 measures and calculates reception powers or reception qualities of the wireless base stations 2-2 and 2-3 based on the signals received from the other adjacent wireless base stations 2-2 and 2-3.

Specifically, for example, the measurement unit 44 can measure a reception power (RSRP: Reference Signal Received Power) included in the signal received from the wireless base station 2 with regard to a known signal such as a pilot signal or a reception quality (RSRQ: Reference Signal Received Quality) with regard to the known signal.

Thus, the wireless terminal 4 can measure, for example, a reception power or a reception quality (Ms) of the cell A which is a serving cell, a reception power or a reception quality (MnB) of the adjacent cell B, and a reception power or a reception quality (MnC) of the adjacent cell C. Ms and MnB above are examples of information used to determine whether the wireless terminal 4 satisfies a first handover condition for the execution of the handover from the cell A to the cell B. MnB and MnC above are examples of information used to determine whether the wireless terminal 4 satisfies a second handover condition for the execution of the handover from the cell B to the cell C.

The data processing unit 45 performs a predetermined process on various kinds of data included in the signal received from the wireless base station 2. For example, the data processing unit 45 can extract various messages included in the signal received from the wireless base station 2 and output the messages to the control unit 46. The above-described various messages include, for example, an RRC Connection Reconfiguration message to be described below.

Thus, the wireless terminal 4 can acquire, for example, HOmargin (HmB) included in the first handover condition for the execution of the handover from the cell A to the cell B or HOmargin (HmC) included in a handover condition for execution of handover from the cell A to the cell C from the wireless base station 2-1.

Likewise, the wireless terminal 4 can acquire, for example, HOmargin (H3) included in the second handover condition for the execution of the handover from the cell B to the cell C or HOmargin (H4) included in a handover condition for execution of handover from the cell C to the cell B.

The data processing unit 45 can extract user data included in the signal received from the wireless base station 2-1 and output the user data to various applications or the like which the wireless terminal 4 has.

The control unit 46 determines whether the own wireless terminal 4 satisfies the transmission (notification) condition of Measurement Report based on the reception power or the reception quality (Ms) of the wireless base station 2-1 measured by the measurement unit 44, the reception powers or the reception qualities (MnB and MnC) of the wireless base stations 2-2 and 2-3 measured by the measurement unit 44, and various HOmargins (HmB, HmC, H3, and H4) acquired by the data processing unit 45.

For example, the control unit 46 can determine whether the wireless terminal 4 satisfies the transmission (notification) condition or the like of Measurement Report based on the reception power or the reception quality (Ms) of the wireless base station 2-1 to which the wireless terminal 4 is connected and which forms the cell A which is a serving cell, the reception powers or the reception qualities (MnB and MnC) of the wireless base stations 2-2 and 2-3 forming the cells B and C which are adjacent cells adjacent to the cell A.

When the control unit 46 determines that the own wireless terminal 4 satisfies the transmission (notification) condition of Measurement Report, the control unit 46 instructs the data generation unit 47 to generate Measurement Report.

The data generation unit 47 receives the instruction from the control unit 46 and generates Measurement Report. Measurement Report generated by the data generation unit 47 is output to the transmission unit 48.

The transmission unit 48 performs a predetermined transmission process on the signal including Measurement Report input from the data generation unit 47 and transmits the processed signal to the wireless base station 2-1 via the antenna 41. The above-described transmission process includes, for example, an encoding process, a modulation process, a digital/analog conversion process, and an up-conversion process.

When it is determined that the own wireless terminal 4 satisfies the first handover condition, the wireless terminal 4 having the above-described configuration can transmit Measurement Report which is a trigger of the execution of the handover to the wireless base station (serving base station) 2-1 forming the cell A. Thus, the wireless terminal 4 can cause the serving base station 2-1 to execute the handover process, and thus execute the handover from the serving cell A to the adjacent cell B or C.

That is, the control unit 46 functions as an example of a control unit that hands over the wireless terminal to another adjacent wireless base station 2-3 adjacent to the wireless base station 2-1 and the adjacent wireless base station 2-2, when the wireless base station 2-1, which stores a handover condition for an adjacent wireless base station (hereinafter, also referred to as a first handover condition) which is a condition under which the wireless base station 2-1 to which the wireless terminal 4 is connected hands over the wireless terminal 4 to the adjacent wireless base station 2-2 adjacent to the wireless base station 2-1 and a handover condition between the adjacent wireless base stations (hereinafter, also referred to as a first [sic, correctly "second"] handover condition) which is a condition under which the adjacent wireless base station 2-2 hands over the wireless terminal connected to the adjacent wireless base station 2-2 to the other adjacent wireless base station 2-3, determines to hand over the connected wireless terminal 4, which is a wireless terminal connected to the wireless base station 2-1, to the adjacent wireless base station 2-2 based on the handover condition for the adjacent wireless base station and the wireless base station 2-1 determines that the adjacent wireless base station 2-2 hands over the connected wireless terminal 4 to the other adjacent wireless base station 2-3 based on the handover condition between the adjacent wireless base stations.

The antenna 41, the duplexer 42, the reception unit 43, and the transmission unit 48 function as examples of a wireless communication unit that performs wireless communication with the wireless base station 2-1 to which the wireless terminal 4 is connected.

(1.3) Example of Configuration of Wireless Base Station 2

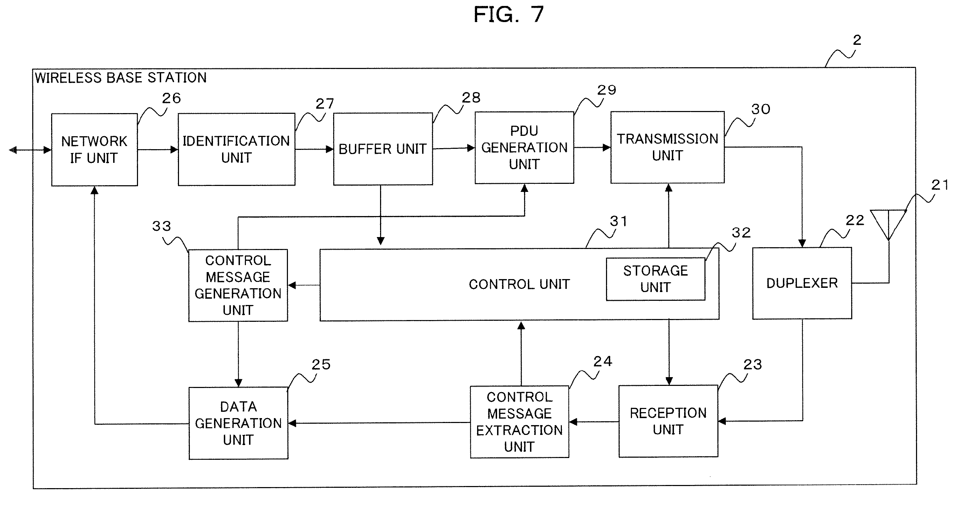

FIG. 7 is a diagram illustrating an example of the configuration of the wireless base station 2.

The wireless base station 2 illustrated in FIG. 7 includes, for example, an antenna 21, a duplexer 22, a reception unit 23, a control message extraction unit 24, a data generation unit 25, a network interface (IF) unit 26, an identification unit 27, and a buffer unit 28. The wireless base station 2 further includes, for example, a protocol data unit (PDU) generation unit 29, a transmission unit 30, a control unit 31 including a storage unit 32, and a control message generation unit 33.

The antenna 21 functions as a reception antenna that receives a wireless signal from the wireless terminal 4 and also functions as a transmission antenna which transmits a wireless signal to the wireless terminal 4. That is, the antenna 21 of this example is configured to commonly serve as the reception antenna and the transmission antenna by using the duplexer 22. FIG. 7 merely illustrates the example of the configuration of the wireless base station 2. For example, when the duplexer 22 is not used, the wireless base station 2 may separately include a transmission antenna and a reception antenna.

The reception unit 23 performs a predetermined reception process on the wireless signal transmitted from the wireless terminal 4 and received by the antenna 21. The reception process includes, for example, a down-conversion process, an analog/digital conversion process, a demodulation process, and a decoding process. The signal subjected to the reception process by the reception unit 23 is output to the control message extraction unit 24.

The control message extraction unit 24 extracts control messages which are included in the signal received from the wireless terminal 4 and are destined for the own wireless base station 2 and a wired network side.

Therefore, for example, the control message extraction unit 24 determines whether data included in the signal received from the wireless terminal 4 is the control message destined for the wireless base station 2-1 or data destined for the wired network side located at a higher level of the wireless base station 2-1.

When the control message extraction unit 24 determines that the data included in the signal received from the wireless terminal 4 is the control message destined for the wireless base station 2-1, the control message extraction unit 24 outputs the control message to the control unit 31.

Conversely, when the control message extraction unit 24 determines that the data included in the signal received from the wireless terminal 4 is the data destined for the wired network side, the control message extraction unit 24 outputs the data to the data generation unit 25.

The control message destined for the wireless base station 2-1 includes Measurement Report from the wireless terminal 4, or the reception power or the reception quality (Ms) of the cell A, the reception power or the reception quality (MnB) of the cell B, and the reception power or the reception quality (MnC) of the cell C.

That is, the reception unit 23 of this example receives, from the wireless terminal 4, the reception quality or the reception power of the wireless terminal 4 in the cell B and the reception quality or the reception power of the wireless terminal 4 in the cell C, which are used to determine whether the second handover condition is satisfied.

The reception unit 23 of this example also has a function of receiving the reception quality of the reception power of the wireless terminal 4 in the cell A and the reception quality or the reception power of the wireless terminal 4 in the cell B, which are used to determine whether the first handover condition is satisfied.

The control message generation unit 33 generates a control message to be transmitted from the wireless base station 2-1 to the wireless terminal 4 or a control message to be transmitted from the wireless base station 2-1 to the other wireless base stations 2-2 and 2-3 adjacent to the own wireless base station 2-1.

The generated control message destined for the wireless terminal 4 is output from the control message generation unit 33 to the PDU generation unit 29. The control message destined for the wireless terminal 4 includes, for example, an RRC Connection Reconfiguration message or the like to be described below.

On the other hand, the generated control message destined for the wireless base station 2-2 or 2-3 is output from the control message generation unit 33 to the data generation unit 25. The control message destined for the wireless base station 2-2 or 2-3 includes, for example, a Handover Request message, a Handover Request Acknowledge message, a Mobility Change Request message, and a Mobility Change Acknowledge message to be described below.

The data generation unit 25 converts each of the control messages input from the control message extraction unit 24 and the control message generation unit 33 into a form which conforms to a format of the wired network side. The data converted by the data generation unit 25 is output to the network IF unit 26.

The network IF unit 26 functions as an interface between the wireless base station 2 and the wired network side. For example, the network IF unit 26 receives the data destined for the wireless terminal 4 from the wired network side or transmits the data destined for the wired network side from the wireless terminal 4.

The network IF unit 26 can also transmit and receive data between the wireless base station 2-1 and the other wireless base stations 2-2 and 2-3. Thus, the wireless base station 2-1 can transmit various control messages to the other wireless base stations 2-2 and 2-3 or receive various control messages from the other wireless base stations 2-2 and 2-3. The control messages transmitted and received between the wireless base station 2-1 and the wireless base stations 2-2 and 2-3 include, for example, a Mobility Change Request message and a Mobility Change Acknowledge message to be described below.

Thus, the wireless base station 2-1 can acquire the second handover condition between the wireless base stations 2-2 and 2-3 from at least one of the wireless base stations 2-2 and 2-3.

The wireless base station 2-1 can notify the wireless base station 2-3 of the handover condition between the own wireless base station 2 and the wireless base station 2-2 or notify the wireless base station 2-2 of the handover condition between the own wireless base station 2 and the wireless base station 2-3.

That is, the network IF unit 26 of this example receives information regarding the second handover condition from the wireless base station 2-1 and the wireless base station 2-2 or 2-3 adjacent to the wireless base station 2-1.

The network IF unit 26 may receive the information regarding the second handover condition from the wireless base station 2-1 and the wireless base station 2-2 or 2-3 adjacent to the wireless base station 2-1 at a timing when the second handover condition is changed.

The network IF unit 26 of this example functions as an example of a transmission unit that transmits information regarding the first handover condition to the other wireless base station 2-3.

In consideration of the fact that the wireless base stations 2-2 and 2-3 have the same configuration as the wireless base station 2-1, of course, the wireless base stations 2-2 and 2-3 include a transmission unit that transmits, to the wireless base station 2-1, the information regarding the second handover condition under which the wireless terminal 4 executes the handover from the cell B to the cell C.

Based on the contents of the data, the identification unit 27 identifies whether the data received from the wired network side via the network IF unit 26 is the data destined for the own wireless base station 2-1 or the data destined for the wireless terminal 4.

For example, when the data received from the wired network side is data with a packet format including a header and a payload, the identification unit 27 can identify whether a packet is data destined for the own wireless base station 2 or data destined for the wireless terminal 4, for example, based on various kinds of identification information or the like stored in a header portion of the packet.

According to the identification result, the identification unit 27 stores the data received from the wired network side in each buffer region provided for each destination in the buffer unit 28. The buffer regions may be configured by different memories included in the buffer unit 28 or may be configured by a plurality of storage regions provided in a single memory included in the buffer unit 28.

The buffer unit 28 stores the data from the identification unit 27. As described above, the buffer unit 28 can store the data in the different buffers according to the destinations (kinds) of the data input from the identification unit 27.

In this case, the buffer unit 28 can include the number of buffers corresponding to the number of wireless terminals 4 connected to the own wireless base station 2-1 and further include a buffer that stores the data destined for the own wireless base station 2-1. The buffers that store the data destined for the wireless terminal 4 may be configured as the number of buffers also according to kinds of data such as VoIP or Web.

On the other hand, the buffer configured to store the data destined for the own wireless base station 2-1 stores control messages such as a Mobility Change Request message and a Mobility Change Acknowledge message received from the other wireless base stations 2-2 and 2-3 adjacent to the own wireless base station 2-1. The control messages are output to the control unit 31.

The PDU generation unit 29 generates a PDU by converting the data destined for the wireless terminal 4 and stored in the buffer unit 28 or the control message generated by the control message generation unit 33 and destined for the wireless terminal 4 into data with a format used at the time of transmission from the wireless base station 2 to the wireless terminal 4.

The transmission unit 30 performs a predetermined transmission process on the PDU generated by the PDU generation unit 29 and transmits the PDU to the wireless terminal 4 via the antenna 21. The above-described transmission process includes, for example, an encoding process, a modulation process, a digital/analog conversion process, and an up-conversion process.

Here, the control unit 31 performs various kinds of control on the process of the wireless base station 2.

For example, the control unit 31 controls scheduling relevant to the transmission and reception of the data between the own wireless base station 2-1 and the wireless terminal 4 based on a buffer situation of the buffer unit 28. Based on the control result of the scheduling, the control unit 31 performs various kinds of control of the PDU generation unit 29, the transmission unit 30, and the reception unit 23 so that the data is transmitted and received between the own wireless base station 2-1 and the wireless terminal 4.

When the control unit 31 performs control on the wireless terminal 4 or the other wireless base stations 2-2 and 2-3, the control unit 31 can instruct the control message generation unit 33 to generate various control messages.

The control unit 31 includes the storage unit 32 that stores the handover condition between the own wireless base station 2-1 and the other wireless base station 2-2 or 2-3 and the handover condition between the other wireless base stations 2-2 and 2-3 based on a control message such as a Mobility Change Request message or a Mobility Change Acknowledge message received from the other wireless base stations 2-2 and 2-3 via the network IF unit 26, the identification unit 27, and the buffer unit 28.

The contents of each handover condition stored in the storage unit 32 may be appropriately updated based on the Mobility Change Request message received from the other wireless base stations 2-2 and 2-3. For example, the storage unit 32 may store various kinds of information regarding the wireless terminal 4 or various kinds of information regarding the wireless communication system 1.

The control unit 31 of this example performs control to determine a handover destination of the wireless terminal 4 based on Measurement Report extracted by the control message extraction unit 24 and transmitted from the wireless terminal 4 and the various handover conditions stored by the storage unit 32.

Specifically, for example, the control unit 31 determines whether the wireless terminal 4 connected to the own wireless base station 2-1 satisfies the first handover condition for the execution of the handover from the cell A to the cell B and also determines whether the wireless terminal 4 satisfies the second handover condition for the execution of the handover from the cell B to the cell C.

Then, the control unit 31 directly hands over the wireless terminal 4 from the cell A to the cell C without execution of the handover from the cell A to the cell B, when the control unit 31 determines that the first and second handover conditions are both satisfied.

That is, when the control unit 31 of this example determines that the connected wireless terminal 4 which is a wireless terminal connected to the wireless base station 2-1 is handed over the adjacent wireless base station 2-2 based on the handover condition for the adjacent wireless base station and the control unit 31 determines that the adjacent wireless base station 2-2 hands over the connected wireless terminal 4 to the other adjacent wireless base station 2-3 based on the handover condition between the adjacent wireless base stations, the control unit 31 functions as an example of a control unit that hands over the connected wireless terminal 4 to the other adjacent wireless base station 2-3.

Thus, for example, since the wireless base station 2-1 can omit unnecessary handover from the cell A to the cell B, it is possible to suppress generation of the handover and to reduce the load of the wireless communication system. Further, it is possible to suppress the generation of the handover and thus reduce occurrence of instantaneous interruption.

When the control unit 31 determines that the wireless terminal 4 satisfies the first handover condition and, meanwhile, determines that the wireless terminal 4 does not satisfy the second handover condition, the control unit 31 may hand over the wireless terminal 4 from the cell A to the cell B.

As described above, in this example, the wireless base station 2-1 has performed the handover control. However, the other wireless base stations 2-2 and 2-3 may perform the same handover control.

Next, an example of a process of the wireless communication system 1 including the wireless terminal 4 having the above-described configuration and the wireless base station 2 having the above-described configuration will be described.

(1.4) Example of Process of Wireless Communication System 1

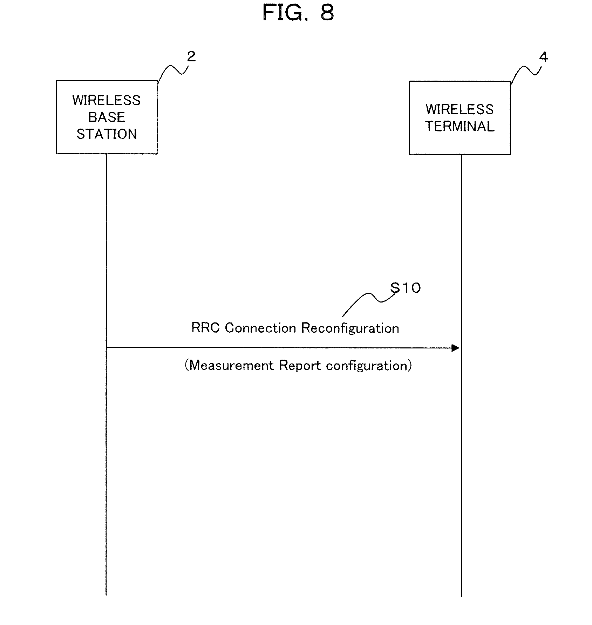

First, as illustrated in FIG. 8, the wireless base station 2 transmits an RRC Connection Reconfiguration message to the wireless terminal 4 to notify the wireless terminal 4 of setting relevant to Measurement Report (step S10). The RRC Connection Reconfiguration message includes a Measurement Report Configuration message that includes setting information regarding Measurement Report.

The RRC Connection Reconfiguration message is transmitted when the wireless terminal 4 is connected to the wireless communication system 1, the setting relevant to Measurement Report is changed, or the wireless terminal 4 is handed over from the serving cell A to the other cell B or C.

When the wireless terminal 4 receives the RRC Connection Reconfiguration message from the wireless base station 2, the wireless terminal 4 refers to a Measurement condition included in Measurement Report Configuration, the notification (transmission) condition of Measurement Report, or setting relevant to notification contents.

Based on the various settings included in Measurement Report Configuration, the wireless terminal 4 measures the reception power or the reception quality (Ms) in the serving cell A and the reception powers or the reception qualities (MnB and MnC) in the adjacent cells B and C and transmits Measurement Report including the measurement result to the wireless base station 2-1.

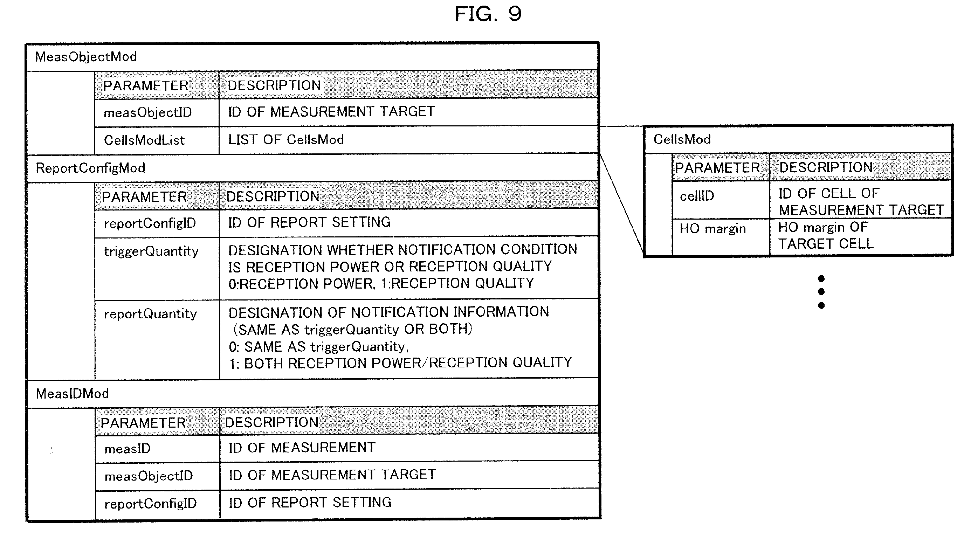

Here, FIG. 9 illustrates an example of the contents of the Measurement Report Configuration message.

As illustrated in FIG. 9, the Measurement Report Configuration message includes three parts, that is, a measurement target module (MeasObjectMod), a notification setting module (ReportConfigMod), and a measurement ID module (MeasIDMod).

MeasObjectMod includes information regarding a measurement target cell. Specifically, for example, MeasObjectMod includes ID (measObjectID) used to identify each setting and a list (CellsModList) of the information regarding measurement target adjacent cells.

CellsModList includes information (CellsMod) regarding the adjacent cells. Each CellsMod includes ID

(CellID) used to identify the cells from each other and a margin value (HOmargin) relevant to the notification condition of Measurement Report.

ReportConfigMod includes the notification condition of Measurement Report and setting information regarding the notification contents. Specifically, for example, ReportConfigMod includes ID (ReportConfigID) used to identify each setting, designation (triggerQuantity) of referring of the reception power or the reception quality as the notification condition of Measurement Report, and designation (reportQuantity) of a single (the reception power or the reception quality) in which triggerQuantity is designated as the notification contents of Measurement Report or both of the reception power and the reception quality. The parameter setting and a method of using the setting in the wireless terminal 4 will be described below.

In MeasIDMod, ReportConfigMod which is setting information regarding Measurement Report is applied to MeasObjectMod which is information of a measurement target. MeasIDMod includes own ID (MeasID), ID (MeasObjectID) of MeasObjectMod, and ID (ReportConfigID) of ReportConfigMod.

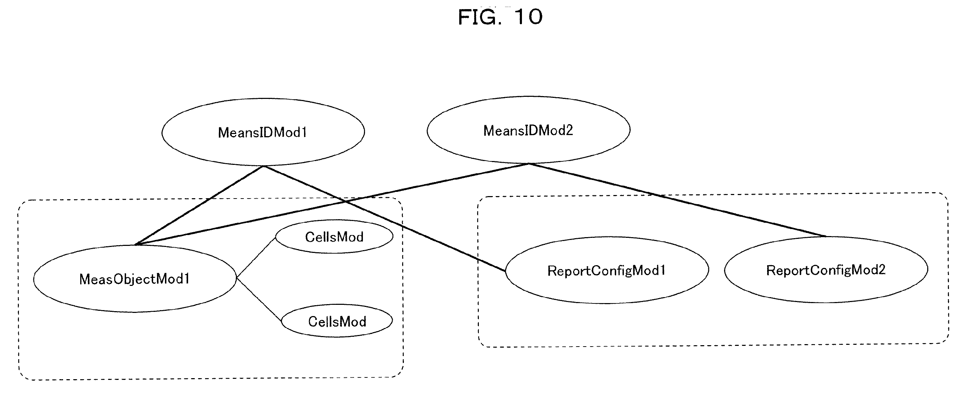

Here, FIG. 10 illustrates an example of the relation between MeasObjectMod, ReportConfigMod, MeasIDMod, and CellsMod.

In MeasIDMOD1, as exemplified in FIG. 10, ReportConfigMod1 is applied to MeasObjectMod1. In MeasIDMod2, ReportConfigMod2 is applied to MeasObjectMod1. Thus, a plurality of ReportConfigMod can be set for each MeasObjectMod.

Based on such Measurement Report Configuration message, the wireless terminal 4 measures the reception quality or the reception power (Ms) in the serving cell A and the reception qualities or the reception powers (MnB and MnC) in the adjacent cells B and C. The wireless terminal 4 transmits Measurement Report including the above-described measurement result to the wireless base station 2-1 forming the serving cell A.

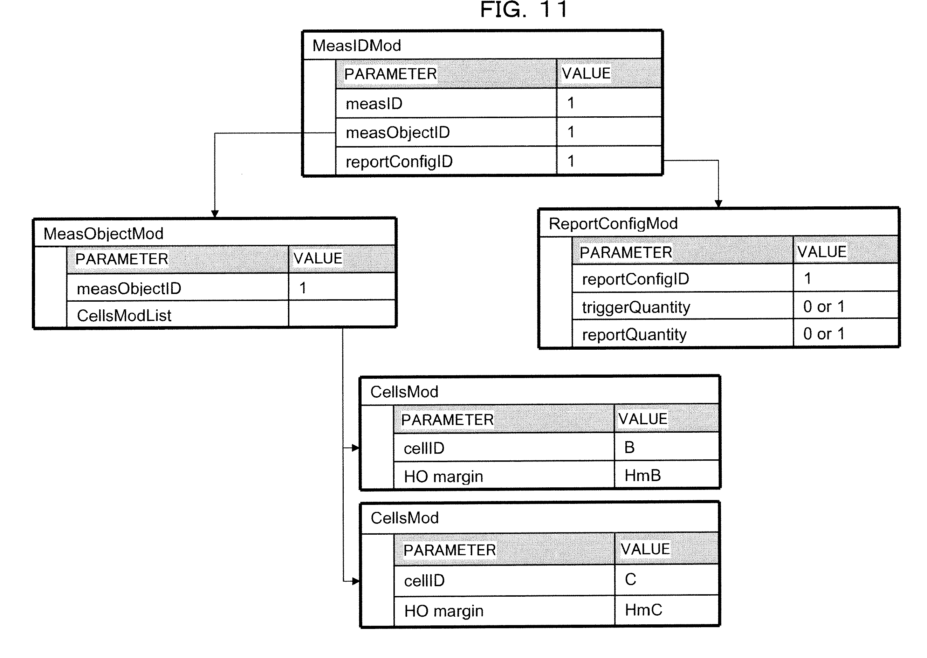

Here, FIG. 11 illustrates an example of a Measurement Report Configuration message transmitted to the wireless terminal 4 connected to the own wireless base station 2-1 by the wireless base station 2-1.

In CellsMod inside CellsModList of MeasObjectMod, as exemplified in FIG. 11, the adjacent cell B (cellID = B) and the adjacent cell C (cellID = C) are each set. In the example illustrated in FIG. 11, it is assumed that HmB is HOmargin in the cell B and HmC is HOmargin in the adjacent cell C. In ReportConfigMod corresponding to MeasObjectMod, triggerQuantity is set to "0" (setting for measurement of the reception power) or "1" (setting for measurement of the reception quality). Further, reportQuantity is set to "0" (setting for report of the same information as triggerQuantity) or "1" (setting for report of the reception power and the reception quality).

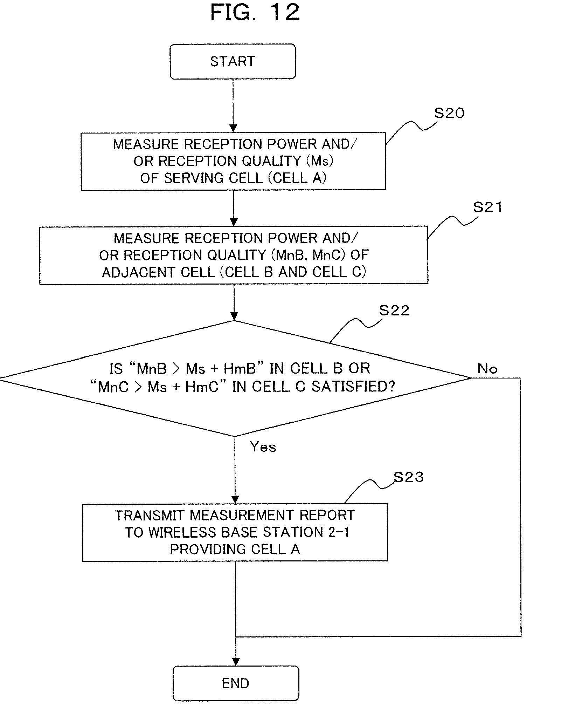

Next, FIG. 12 illustrates an example of a processing flow when the wireless terminal 4 connected to the wireless base station 2-1 transmits Measurement Report based on the Measurement Report Configuration message exemplified in FIG. 11.

As exemplified in FIG. 12, first, the wireless terminal 4 measures at least one of the reception power and the reception quality (Ms) in the serving cell A (step S20). Then, the wireless terminal 4 measures at least one of the reception power and the reception quality (MnB, MnC) of each of the adjacent cells B and C (step S21).

The wireless terminal 4 determines whether to satisfy the notification condition of Measurement Report in regard to the reception power or the reception quality (Ms, MnB, MnC) in each of the cells A, B, and C based on triggerQuantity set in the Measurement Report Configuration message.

Specifically, for example, the wireless terminal 4 determines whether to satisfy a condition of Expression (2) or Expression (3) below based on MnB and MnC which are the measurement results of the reception powers or the reception qualities of the cells B and C and Ms which is the measurement result of the reception power or the reception quality of the serving cell A (step S22).

[Expression 2]

$$MnB > Ms + HmB \qquad \cdot \cdot \cdot (2)$$

[Expression 3]

$$MnC > Ms + HmC \qquad \cdot \cdot \cdot (3)$$

Here, each of HmB and HmC is a parameter (HOmargin) set in the Measurement Report Configuration message. That is, each handover condition include a weight in comparison between the information regarding the reception quality of the wireless signal which the wireless terminal 4 receives from the wireless base station serving as a handover source and the information regarding the reception quality of the wireless signal which the wireless terminal 4 receives from the wireless base station serving as a handover destination.

When both of Expression (2) and Expression (3) above are not satisfied (No route of step S22), the wireless terminal 4 ends the process without transmission of the measurement notification to the wireless base station 2-1.

Conversely, when either Expression (2) or Expression (3) is satisfied (Yes route of step S22), the wireless terminal 4 transmits Measurement Report to the wireless base station 2-1 forming the serving cell A (step S23).

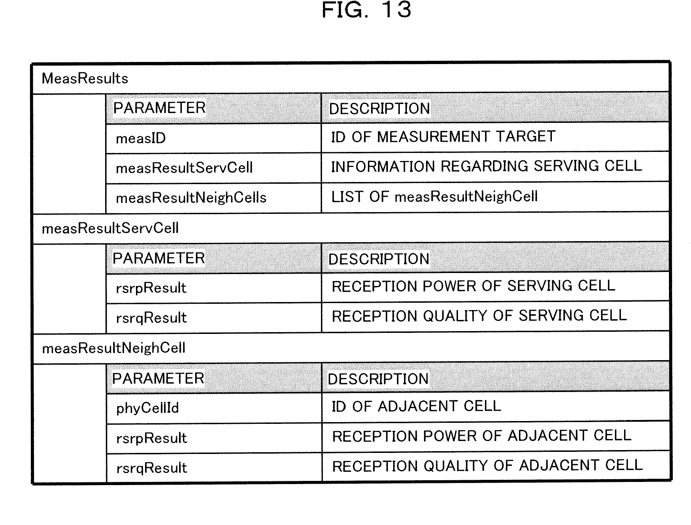

Here, FIG. 13 illustrates an example of the contents of Measurement Report.

As exemplified in FIG. 13, Measurement Report includes MeasResults which is information regarding the measurement result. MeasResults includes measID, measResultServCell, and measResultNeighCells.

Here, measID corresponds to MeasID in MeasIDMod of the Measurement Report Configuration message illustrated in FIG. 9. Thus, the wireless terminal 4 designates the measurement result corresponding to MeasID of the Measurement Report Configuration message by MeasID and transmits Measurement Report.

Here, measResultServCell includes at least one piece of information between the reception power (rsrpResult) and the reception quality (rsrqResult) of the serving cell A. Further, measResultNeighCell of measResultNeighCells includes ID (phyCellId) of each of the adjacent cells B and C and at least one of the reception power (rsrpResult) and the reception quality (rsrqResult) of each of the adjacent cells B and C. As described above, whether the information included Measurement Report is the reception power or the reception quality, or both of the reception power and the reception quality is designated (set) by reportQuantity in the Measurement Report Configuration message.

Here, the wireless terminal 4 connected to the wireless base station 2-1 forming the cell A transmits Measurement Report to the wireless base station 2-1, when the wireless terminal 4 satisfies the notification condition of Measurement Report illustrated in step S22 of FIG. 12 based on the Measurement Report Configuration message illustrated in FIG. 11.

At this time, at least one of the reception power and the reception quality (Ms) in the serving cell A and at least one of the reception power and the reception quality (MnB, MnC) of each of the adjacent cells B and C are set in MeasResults of Measurement Report.

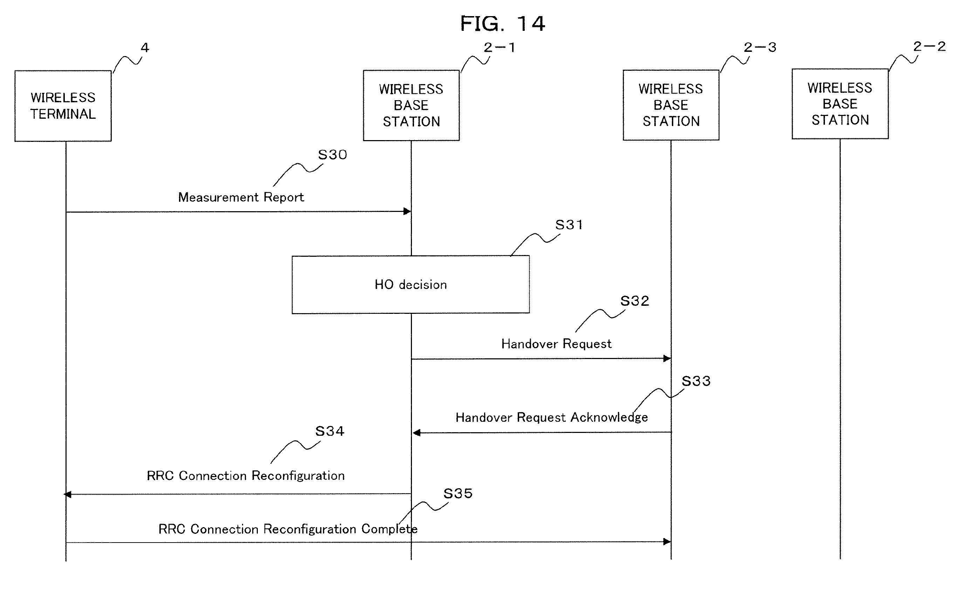

Here, FIG. 14 illustrates an example of a sequence of the handover. When the wireless base station 2-1 forms a plurality of cells and wireless terminal 4 executes handover between the plurality of cells inside the wireless base station 2, a sequence between different wireless base stations 2 can be omitted.

First, the wireless terminal 4 measures the reception power or the reception quality (Ms) in the serving cell A and the reception powers or the reception qualities (MnB and MnC) of the adjacent cells B and C. When the measurement result satisfies the notification condition of Measurement Report, the wireless terminal 4 transmits Measurement Report to the wireless base station 2-1 forming the serving cell A (step S30). In the example illustrated in FIG. 14, the reception power or the reception quality (MnB) of the cell B adjacent to the serving cell A satisfies the notification condition of Measurement Report.

The wireless terminal 4 causes at least one piece of information (Ms) of the measured reception power and the measured reception quality of the cell A and at least one piece of information (MnB, MnC) of the reception power and the reception quality of each of the cells B and C to be included in Measurement Report, and transmits Measurement Report to the wireless base station 2-1.

The wireless base station 2-1 receiving Measurement Report from the wireless terminal 4 performs control to determine (HO decision) a handover target cell according to each handover condition with reference to the reception power or the reception quality (Ms) of the cell A included in Measurement Report and the reception powers or the reception qualities (MnB and MnC) of the cells B and C (step S31). Here, the wireless base station 2-1 selects the cell C as the handover target cell rather than the cell B.

After the cell C is determined as the handover destination, the wireless base station 2-1 transmits a Handover Request message to the wireless base station 2-3 providing the cell C (step S32).

When the wireless base station 2-3 permits the handover of the wireless terminal 4, the wireless base station 2-3 receiving the Handover Request message from the wireless base station 2-1 replies a Handover Request Acknowledge message to the wireless base station 2-1 (step S33).

After the wireless base station 2-1 receives the Handover Request Acknowledge message from the wireless base station 2-3, the wireless base station 2-1 transmits an RRC Connection Reconfiguration message to the wireless terminal 4 (step S34). The RRC Connection Reconfiguration message is a control message used to instruct the wireless terminal 4 to perform the handover and includes various kinds of information regarding the cell C which is the handover target cell, as described above.

The wireless terminal 4 receiving the RRC Connection Reconfiguration message from the wireless base station 2-1 performs connection to the wireless base station 2-3 forming the target cell C with reference to the various kinds of information included in this message and transmits an RRC Connection Reconfiguration Complete message to the wireless base station 2-3 (step S35).

Then, the wireless base station 2-3 receives the RRC Connection Reconfiguration Complete message from the wireless terminal 4, and the sequence of the handover ends.

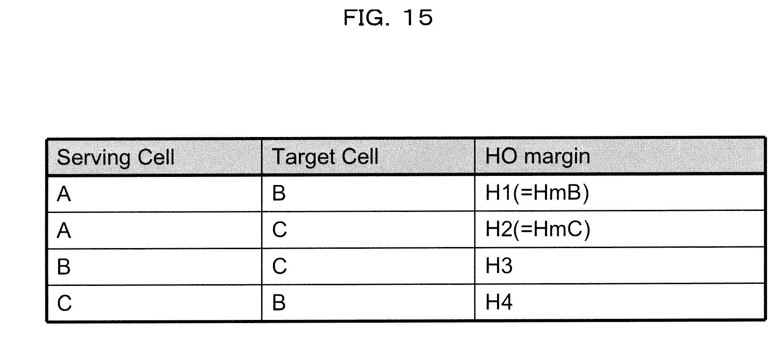

Here, FIG. 15 illustrates an example of a table referred to when the wireless base station 2-1 providing the cell A determines the handover target cell. The table exemplified in FIG. 15 maintains the conditions (H1 (= HmB) and H2 (= HmC)) used for the execution of the handover from the serving cell A to the adjacent cell B or C and the conditions (H3 and H4) used for the execution of the handover between the adjacent cells B and C. The table is stored in the above-described storage unit 32. The conditions (H3 and H4) for the execution of the handover between the adjacent cells B and C are notified in advance from the other adjacent wireless base station 2-2 or 2-3 to the wireless base station 2-1, as described above. The handover condition from the serving cell A to the adjacent B or C is the condition described in Expression (2) and Expression (3).

In the above-described table, the information (H3 and H4) regarding the handover condition between the adjacent cells B and C is set according to Measurement Report Configuration set in the wireless base station 2-2 providing the adjacent cell B or the wireless base station 2-3 providing the adjacent cell C.

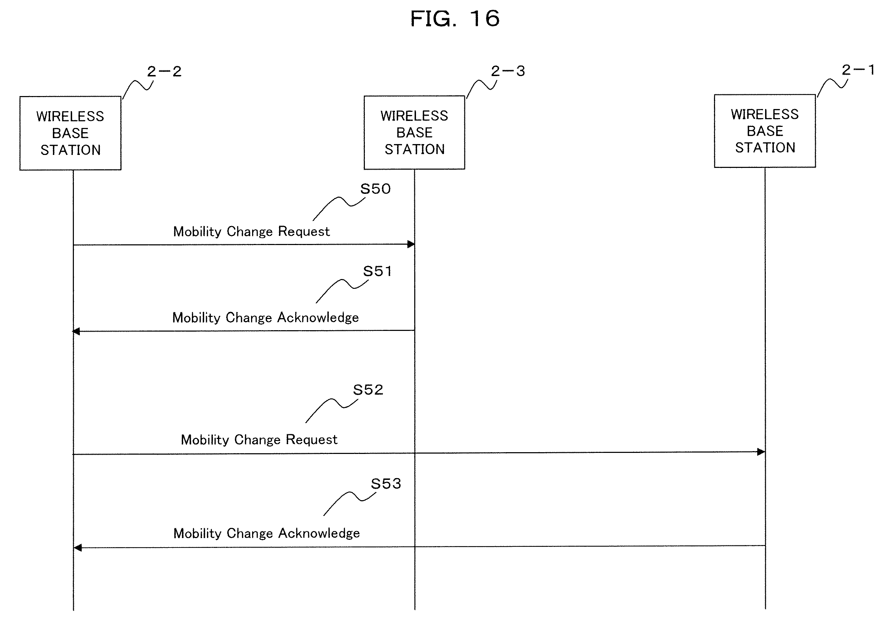

Here, FIG. 16 illustrates an example of the control message transmitted and received between the wireless base stations 2.

As exemplified in FIG. 16, the wireless base station 2-2 notifies the wireless base stations 2-3 and 2-1 of the information regarding the handover condition.

The wireless base station 2-2 first transmits the Mobility Change Request message to the wireless base station 2-3 (step S50) and makes request for updating the handover condition between the cells B and C.

Specifically, for example, when the load of the wireless base station 2-2 exceeds a predetermined threshold value and the updating of the handover condition from the wireless base station 2-2 to the wireless base station 2-3 is designed, the wireless base station 2-2 requests the wireless base station 2-3 that the wireless base station 2-3 changes the value of HOmargin (H3) used for the handover condition from the cell B to the cell C to a smaller value and changes the value of HOmargin (H4) used for the handover condition from the cell C to the cell B to a larger value.

When the wireless base station 2-3 permits the above request, the wireless base station 2-3 replies the Mobility Change Acknowledge message to the wireless base station 2-2 (step S51).

Next, the wireless base station 2-2 transmits the Mobility Change Request message to the wireless base station 2-1 (step S52). The Mobility Change Request message is configured so that the wireless base station 2-1 is requested to change the value of HOmargin used for the handover condition from the cell B to the cell A to a smaller value and change the value of HOmargin (H1 = HmB) used for the handover condition from the cell A to the cell B to a larger value.

The wireless base station 2-2 causes the information regarding the updated value of HOmargin (H3) to be included in the Mobility Change Request message and transmits the Mobility Change Request message to the wireless base station 2-1. The Mobility Change Request message may include the information regarding the updated value of HOmargin (H4).

When the wireless base station 2-1 permits the above request, the wireless base station 2-1 replies a Mobility Change Acknowledge message to the wireless base station 2-2 (step S53).

Here, an example of the contents of the Mobility Change Request message transmitted from the wireless base station 2-2 to the wireless base station 2-1 will be described.

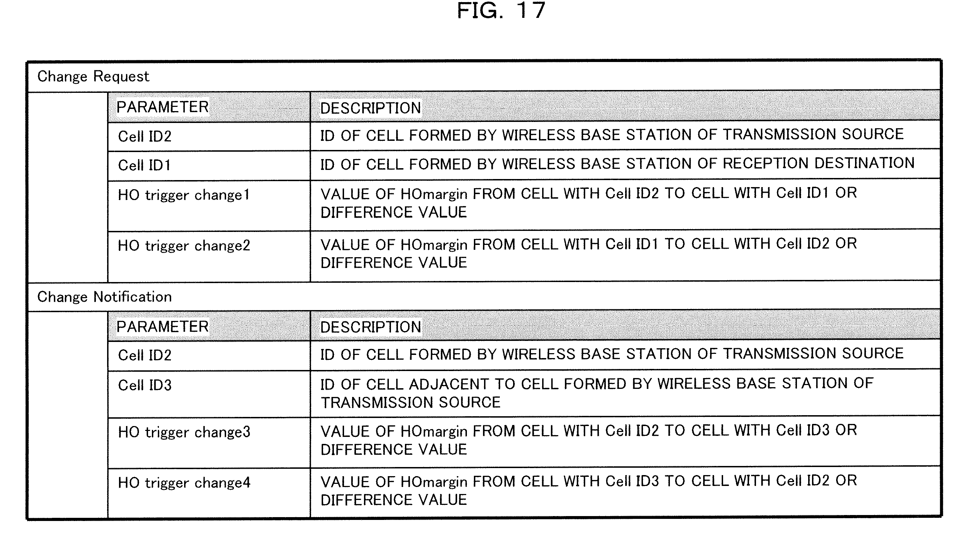

As exemplified in FIG. 17, the Mobility Change Request message of this example includes Change Request information and Change Notification information.

The Change Request information includes, for example, the ID (Cell ID2) of the cell B provided by the wireless base station 2-2 serving as a transmission source of the Mobility Change Request message and the ID (Cell ID1) of the cell A provided by the wireless base station 2-1 serving as the transmission destination of the Mobility Change Request message.

The Change Request information includes HO trigger change1 information indicating the value of HOmargin or a difference value included in the handover condition from the cell B of Cell ID2 to the cell A of Cell ID1 and HO trigger change2 information indicating the value of HOmargin or a difference value included in the handover condition from the cell A of Cell ID1 to the cell B of Cell ID2. Here, the difference value refers to a value indicating a difference between the current value of HOmargin and the updated (changed) value of HOmargin.

The Change Notification information includes, for example, the ID (Cell ID2) of the cell B provided by the wireless base station 2-2 serving as the transmission source of the Mobility Change Request message and the ID (Cell ID3) of the cell C provided by the wireless base station 2-3 adjacent to the wireless base stations 2-2 and 2-1.

The Change Notification information includes HO trigger change3 information indicating the value of HOmargin or a difference value included in the second handover condition from the cell B of Cell ID2 to the cell C of Cell ID3. The Change Notification information may further include HO trigger change4 indicating the value of HOmargin or a difference value included in the handover condition from the cell C of Cell ID3 to the cell B of Cell ID2.

Thus, in this example, for example, the wireless base station 2-2 can notify the wireless base station 2-1 of the Mobility Change Request message including the information (Change Notification information) regarding the second handover condition in addition to the information (Change Request information) regarding the first handover condition.

In the above-described example, the wireless base station 2-2 has transmitted the Mobility Change Request message in the order of the wireless base station 2-3 and the wireless base station 2-1. However, for example, the transmission order of the Mobility Change Request message may be determined based on each value of the updated value of HOmargin (H3) and the updated value of HOmargin (H1 = HmB).

For example, the wireless base station 2-2 may compare the updated value of HOmargin (H3) to the updated value of HOmargin (H1 = HmB) and transmit the Mobility Change Request message in the order of the wireless base stations 2 with the updated smaller value of HOmargin. Further, the wireless base station 2-2 does not later notify the wireless base station 2-3, to which the Mobility Change Request message is first transmitted, of the information regarding the value of HOmargin included in the Mobility Change Request message transmitted later to the wireless base station 2-1.

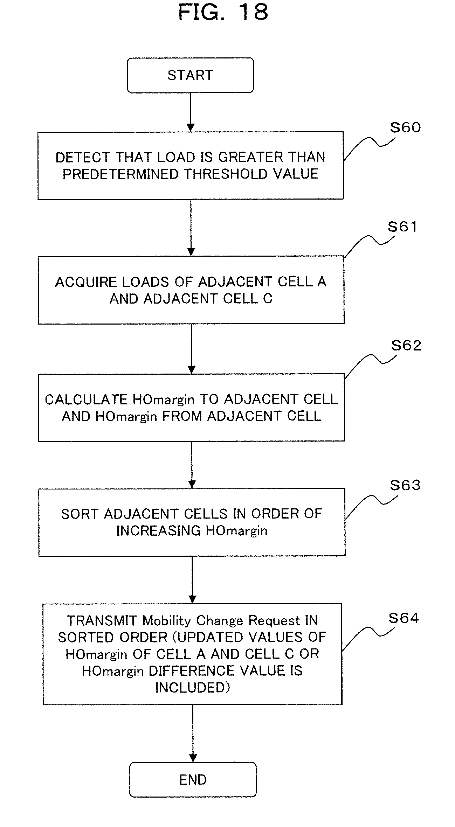

For example, as illustrated in FIG. 18, the wireless base station 2-2 first measures the load of the own wireless base station 2-2 and determines whether the measurement result is greater than the predetermined threshold value. The load of the wireless base station 2 includes, for example, a CPU load, a resource use amount, and a resource use ratio in the wireless base station 2.

When the wireless base station 2-2 determines (detects) that the load of the own wireless base station 2-2 is greater than the predetermined threshold value (step S60), the wireless base station 2-2 acquires the loads of the wireless base stations 2-1 and 2-3 providing the cells A and C, respectively, adjacent to the cell B provided by the own wireless base station 2-2 (step S61). Information regarding the load of each of the wireless base stations 2-1 and 2-3 can be transmitted and received by the network IF unit 26 of each of the wireless base stations 2.

Subsequently, the wireless base station 2-2 computes (calculates) each value of HOmargin included in the handover condition from the cell B provided by the own wireless base station 2-2 to the adjacent cells A and C and each value of HOmargin included in the handover condition from the adjacent cells A and C to the cell B based on the information regarding each load acquired in step S60 and step S61 (step S62). As described above, the value of HOmargin may preferentially be changed to a small value with regard to the cell with a relatively low load or the cell using a wireless frequency different from a wireless frequency used in the cell with a relatively high load.

Then, based on each value of HOmargin calculated in step S62, the wireless base station 2-2 sorts a transmission order of the Mobility Change Request message to the adjacent cells A and C in the order of the increasing value of HOmargin included in the handover condition from the cell B (step S63).

Then, the wireless base station 2-2 transmits the Mobility Change Request message in the order sorted in step S63 to the wireless base stations 2-3 and 2-1 (step S64).

Thus, the wireless base station 2-2 can cause the information (H3) included in the second handover condition between the wireless base stations 2-2 and 2-3 to be included in the Change Notification information of the Mobility Change Request message to be transmitted to the wireless base station 2-1. In the above-described example, the wireless base station 2-2 notifies the wireless base station 2-1 of the information (H3) included in the second handover condition. However, the wireless base station 2-3 may notify the wireless base station 2-1 of the same information.

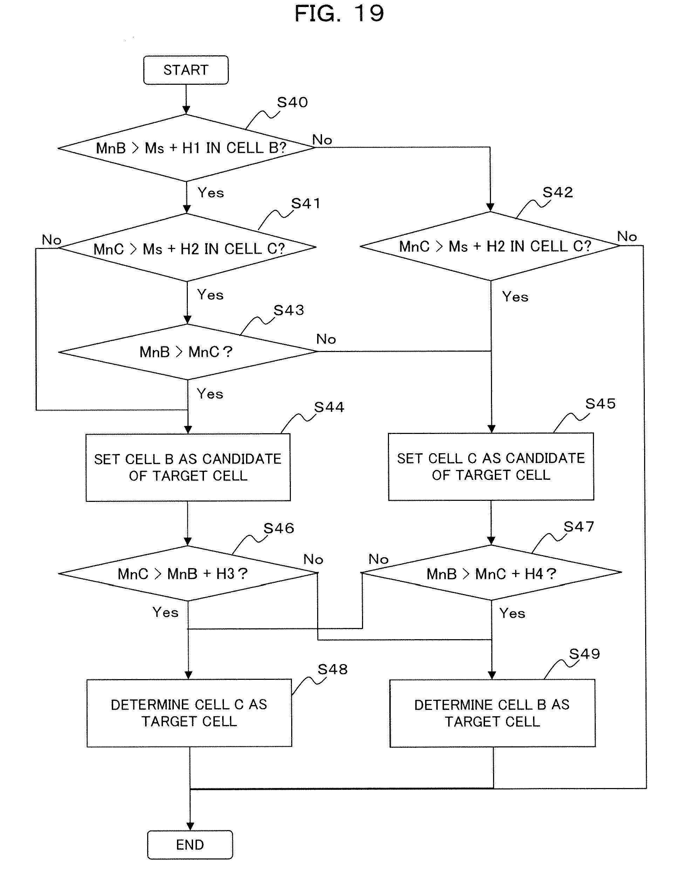

Here, the wireless base station 2-1 of this example stores the information (H3) included in the second handover condition notified of by the wireless base station 2-2 or 2-3 in the above-described table of the storage unit 32 and performs control to determine a handover destination of the wireless terminal 4 based on the contents of the table. FIG. 19 illustrates an example of a control flow of determination of the handover destination.

As exemplified in FIG. 19, using the fact that the wireless base station 2-1 receives Measurement Report from the wireless terminal 4 as a trigger, the wireless base station 2-1 first determines whether the wireless terminal 4 satisfies the first handover condition based on the reception power or the reception quality (MnB) of the cell B included in Measurement Report, the reception power or the reception quality (Ms) of the cell A included in Measurement Report, and HOmargin (H1 = HmB) stored in the table (step S40). Specifically, the wireless base station 2-1 determines whether Expression (4) below is satisfied.

[Expression 4]

$$MnB > Ms + H1 \qquad \cdot\;\cdot\;\cdot \quad (\,4\,)$$

When Expression (4) above is satisfied (Yes route of step S40), the wireless base station 2-1 determines whether the wireless terminal 4 satisfies another handover condition based on the reception power or the reception quality (MnC) of the cell C included in Measurement Report, the reception power or the reception quality (Ms) of the cell A included in Measurement Report, and HOmargin (H2 = HmC) stored in the table (step S41). Specifically, the wireless base station 2-1 determines whether Expression (5) below is satisfied.

[Expression 5]

$$MnC > Ms + H2 \qquad \cdot\;\cdot\;\cdot \quad (\,5\,)$$

When Expression (5) above is satisfied (Yes route of step S41), the wireless terminal 4 satisfies both of the first handover condition from the cell A to the cell B and the handover condition from the cell A to the cell C. Therefore, the wireless base station 2-1 determines which cell is better between the cells B and C in the handover of the wireless terminal 4 (step S43). Specifically, the wireless base station 2-1 determines whether Expression (6) below is satisfied.

[Expression 6]

$$MnB > MnC \qquad \cdot\;\cdot\;\cdot \quad (\,6\,)$$

When Expression (6) above is satisfied (Yes route of step S43), the wireless base station 2-1 sets the cell B as a candidate of the handover destination target cell of the wireless terminal 4 (step S44).

Conversely, when Expression (5) above is not satisfied (No route of step S41), the wireless terminal 4 satisfies only the first handover condition from the cell A to the cell B. Therefore, the wireless base station 2-1 sets the cell B as a candidate of the handover destination target cell of the wireless terminal 4 (step S44).

Conversely, when Expression (4) above is not satisfied (No route of step S40), the wireless base station 2-1 determines whether the wireless terminal 4 satisfies another handover condition described in Expression (5) above based on the reception power or the reception quality (MnC) of the cell C included in Measurement Report, the reception power or the reception quality (Ms) of the cell A included in Measurement Report, and HOmargin (H2 = HmC) stored in the table (step S42).

When Expression (5) above is satisfied (Yes route of step S42) or Expression (6) above is not satisfied (No route of step S43), the wireless base station 2-1 selects the cell C as a candidate of the handover destination target cell of the wireless terminal 4 (step S45). When Expression (5) above is not satisfied (No route of step S42), the wireless terminal 4 does not satisfy any handover condition. Therefore, the wireless base station 2-1 ends the process without the execution of the handover of the wireless terminal 4.

Here, the wireless base station 2-1 of this example determines whether the handover destination set in step S44 and step S45 described above is proper and determines the handover destination of the wireless terminal 4 as a handover destination different from the handover destination set in step S44 and step S45 described above according to the determination result.

For example, when the wireless base station 2-1 sets the cell B as the candidate of the handover destination target cell of the wireless terminal 4 in step S44 described above and the handover is subsequently executed, the wireless base station 2-1 determines whether the handover from the cell B to the cell C is executed again (step S46). Specifically, the wireless base station 2-1 determines whether Expression (7) below is satisfied.

[Expression 7]

$$MnC > MnB + H3 \qquad \cdots \quad (7)$$

When Expression (7) above is satisfied (Yes route of step S46), the wireless base station 2-1 determines the cell C rather than the cell B as the handover destination target cell of the wireless terminal 4 (step S48), and then the process ends.

Conversely, when Expression (7) above is not satisfied (No route of step S46), the wireless base station 2-1 determines, as the handover destination target cell of the wireless terminal 4, the cell B set as the candidate of the target cell in step S44 (step S49), and then the process ends.

For example, the wireless base station 2-1 selects the cell C as the candidate of the handover destination target cell of the wireless terminal 4 in step S45 described above, and then determines whether the handover from the cell C to the cell B is executed again when the handover is executed (step S47). Specifically, the wireless base station 2-1 determines whether Expression (8) below is satisfied.

[Expression 8]

$$MnB > MnC + H4 \qquad \cdots \quad (8)$$

When Expression (8) above is satisfied (Yes route of step S47), the wireless base station 2-1 determines the cell B rather than the cell C as the handover destination target cell of the wireless terminal 4 (step S49), and then the process ends.

Conversely, when Expression (8) above is not satisfied (No route of step S47), the wireless base station 2-1 determines, as the handover destination target cell of the wireless terminal 4, the cell C selected as the candidate of the target cell in step S45 (step S48), and the process ends.

When the information (H3, H4) regarding the handover condition between the adjacent cells B and C is not set in the above-described table, the wireless base station 2-1 does not perform the processes of step S46 to step S49 described above.

As described above, in this embodiment, the wireless base station 2-1 does not hand over the wireless terminal 4 from the cell A to the cell B but hands over the wireless terminal 4 from the cell A to the cell C, when the wireless terminal 4 connected to the own wireless base station 2-1 satisfies the first handover condition for the execution of the handover from the cell A to the cell B and the second handover condition for the execution of the handover from the cell B to the cell C. That is, the wireless terminal 4 is handed over directly from the cell A to the cell C without passing through the cell B.

Thus, since the handover from the cell A to the cell B can be omitted, it is possible to suppress generation of the handover and reduce the load of the wireless communication system 1. Further, it is possible to reduce occurrence of instantaneous interruption caused in the handover. As described above, the same handover control can be performed even in the other wireless base stations 2-2 and 2-3.

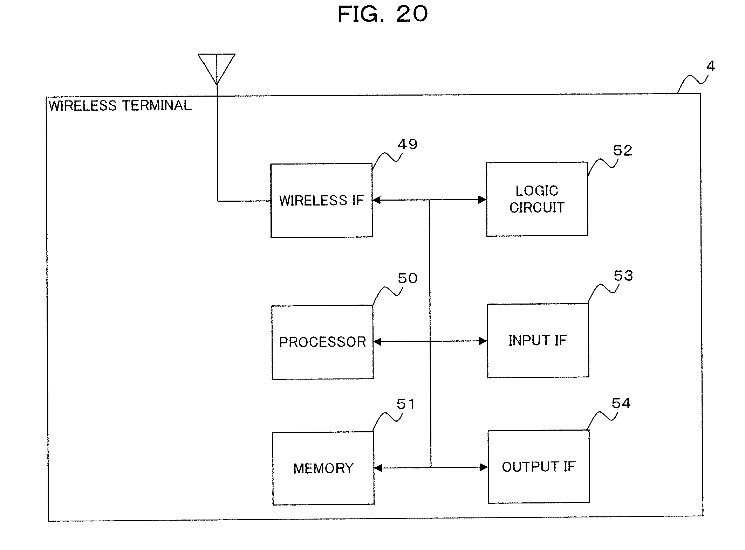

FIG. 20 illustrates an example of a hardware configuration of the wireless terminal 4.

A wireless interface (IF) 49 is an interface device that performs wireless communication with the wireless base station 2. A processor 50 is a device that processes data and includes, for example, a central processing unit (CPU) or a digital signal processor (DSP), etc. A memory 51 is a device that stores data and includes, for example, a read-only memory (ROM) or a random access memory (RAM), etc. A logic circuit 52 is an electronic circuit that performs a logic operation and includes, for example, a large scale integration (LSI) or a field-programmable gate array (FPGA), etc. An input IF 53 is a device that performs an input and includes, for example, an operation button or a microphone, etc. An output IF 54 is a device that performs an output and includes, for example, a display or a speaker, etc.

For example, a correspondence relation between each configuration of the wireless terminal 4 exemplified in FIG. 6 and each configuration of the wireless terminal 4 exemplified in FIG. 20 is as follows.

The wireless IF 49 corresponds to, for example, parts of the antenna 41, the duplexer 42, and the reception unit 43 and a part of the transmission unit 48. The processor 50, the memory 51, and the logic circuit 52 correspond to, for example, a part of the reception unit 43 and parts of the measurement unit 44, the data processing unit 45, the control unit 46, the data generation unit 47, and the transmission unit 48.

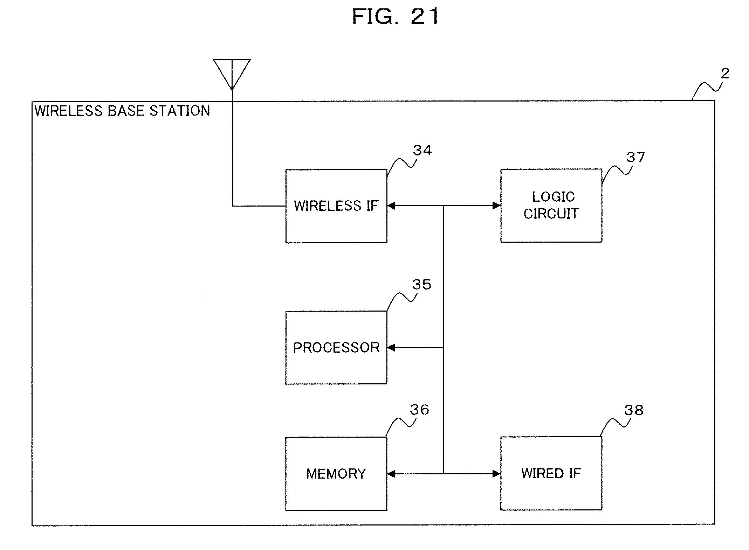

FIG. 21 illustrates an example of a hardware configuration of the wireless base station 2.

A wireless interface (IF) 34 is an interface device that performs wireless communication with the wireless terminal 4. A processor 35 is a device that processes data and includes, for example, a central processing unit (CPU) or a digital signal processor (DSP), etc. A memory 36 is a device that stores data and includes, for example, a read-only memory (ROM) or a random access memory (RAM), etc. A logic circuit 37 is an electronic circuit that performs a logic operation and includes, for example, a large scale integration (LSI) or a field-programmable gate array (FPGA), etc. A wired IF 38 is an interface device that performs wired communication with another wireless base station or the like connected to a network (so-called backhaul network) on a cellular phone system network side.

For example, a correspondence relation between each configuration of the wireless base station 2 exemplified in FIG. 7 and each configuration of the wireless base station 2 exemplified in FIG. 21 is as follows.

The wireless IF 34 corresponds to, for example, parts of the antenna 21, the duplexer 22, and the reception unit 23 and a part of the transmission unit 30. The processor 35, the memory 36, and the logic circuit 37 correspond to, for example, a part of the reception unit 23, parts of the control message extraction unit 24, the data generation unit 25, the identification unit 27, the buffer unit 28, the PDU generation unit 29, and the transmission unit 30, the control unit 31 including the storage unit 32, and the control message generation unit 33. The wired IF 38 corresponds to, for example, the network IF unit 26.

[2] Others

Each configuration and each function of the wireless base station 2 and the wireless terminal 4 according to the above-described embodiment may be carefully selected or may be appropriately combined and used. That is, each configuration and each function described above may be carefully selected or may be appropriately combined and used so that the function of the invention can be exerted.

For example, in the above-described embodiment, the wireless base station 2-1 has acquired the information regarding the second handover condition by receiving the Mobility Change Request message from the wireless base station 2-2. However, the second handover condition may be acquired according to another method. For example, the second handover condition in the wireless base station 2-1 may be stored by preliminary setting. In such an embodiment, the handover condition differs between the wireless base stations. However, this embodiment may be realized when the handover condition is not dynamically changed or the handover condition is not frequently changed.

In the above-described embodiment, the invention has been described giving the example in which the wireless communication system 1 includes three adjacent cells. However, even when the number of adjacent cells is greater than three, the above-described handover control can be performed. In this case, for example, the wireless base station 2-1 may receive the information included in handover conditions between the respective adjacent cells from the other wireless base stations 2 and may perform the same control flow as the control flow exemplified in FIG. 16 on each adjacent cell. Specifically, for example, the wireless base station 2 providing a serving cell may sequentially predict a handover destination of the wireless terminal 4 and may at first perform the control of the handover to the wireless base station 2 to which the wireless terminal 4 is finally connected.

In the above-described embodiment, the invention has been described giving the example in which the wireless base station 2 is an agent of the handover control. However, the wireless terminal 4 may serve as the agent of the handover control. In this case, for example, the wireless terminal 4 may receive various kinds of information from the wireless base stations 2 and perform the same control flow as the control flow exemplified in FIG. 16 based on the received various kinds of information.

In the above-described embodiment, the invention has been described giving the example in which the wireless base station 2-2 or 2-3 notifies the wireless base station 2-1 of the information included in the second handover condition. However, the wireless base station 2-2 or 2-3 may notify another wireless base station adjacent to the own wireless base station 2-2 or 2-3 of the information included in the second handover condition. Thus, the same handover control may also be performed on the wireless terminal 4 located between the wireless base station 2-2 or 2-3 and the other wireless base station adjacent to the wireless base station 2-2 or 2-3.

REFERENCE SIGNS LIST

100, 101: WIRELESS COMMUNICATION SYSTEM
200-1, 200-2, 200-3: WIRELESS BASE STATION
300-1, 300-2, 300-3: WIRELESS AREA (CELL A, CELL B, CELL C)
400: WIRELESS TERMINAL
1: WIRELESS COMMUNICATION SYSTEM
2-1, 2-2, 2-3: WIRELESS BASE STATION
3-1, 3-2, 3-3: WIRELESS AREA (CELL A, CELL B, CELL C)
4: WIRELESS TERMINAL

41: ANTENNA
42: DUPLEXER
43: RECEPTION UNIT
44: MEASUREMENT UNIT
45: DATA PROCESSING UNIT
46: CONTROL UNIT
47: DATA GENERATION UNIT
48: TRANSMISSION UNIT
49: WIRELESS IF
50: PROCESSOR
51: MEMORY
52: LOGIC CIRCUIT
53: INPUT IF
54: OUTPUT IF
21: ANTENNA
22: DUPLEXER
23: RECEPTION UNIT
24: CONTROL MESSAGE EXTRACTION UNIT
25: DATA GENERATION UNIT
26: NETWORK IF UNIT
27: IDENTIFICATION UNIT
28: BUFFER UNIT
29: PDU GENERATION UNIT
30: TRANSMISSION UNIT
31: CONTROL UNIT
32: STORAGE UNIT
33: CONTROL MESSAGE GENERATION UNIT
34: WIRELESS IF
35: PROCESSOR
36: MEMORY
37: LOGIC CIRCUIT
38: WIRED IF

**Claims**

1. A wireless base station comprising:

   a storage unit that stores a handover condition for an adjacent wireless base station, which is a condition under which the wireless base station hands over a wireless terminal connected to the wireless base station to the adjacent wireless base station adjacent to the wireless base station, and a handover condition between adjacent wireless base stations, which is a condition under which the adjacent wireless base station hands over a wireless terminal connected to the adjacent wireless base station to another adjacent wireless base station adjacent to the wireless base station and the adjacent wireless base station; and
   a control unit that hands over a connected wireless terminal which is a wireless terminal connected to the wireless base station to the other adjacent wireless base station, when the control unit determines that the adjacent wireless base station hands over the connected wireless terminal to the other adjacent wireless base station based on the handover condition between the adjacent wireless base stations in the case that the control unit determines that the connected wireless terminal is handed over to the adjacent wireless base station based on the handover condition for the adjacent wireless base station.

2. The wireless base station according to claim 1, wherein the handover conditions under which the wireless terminal is handed over include a weight in comparison between information regarding a reception quality of a wireless signal which the wireless terminal receives from a wireless base station serving as a handover source and information regarding a reception quality of a wireless signal which the wireless terminal receives from a wireless base station serving as a handover destination.

3. The wireless base station according to claim 1 or 2, wherein the control unit hands over the connected wireless terminal to the adjacent wireless base station, when the control unit determines that the adjacent wireless base station does not hand over the connected wireless terminal to the other adjacent wireless base station based on the handover condition between the adjacent wireless base stations in the case that the control unit determines that the connected wireless terminal is handed over to the adjacent wireless base station based on the handover condition for the adjacent wireless base station.

4. The wireless base station according to any one of claims 1 to 3, further comprising:

a reception unit that receives, from the connected wireless terminal, information regarding a reception quality of a wireless signal which the connected wireless terminal receives from each of the wireless base station, the adjacent wireless base station, and the other adjacent wireless base station,
wherein, based on the received information regarding the reception quality, the control unit determines that the connected wireless terminal is handed over to the adjacent wireless base station and determines that the adjacent wireless base station hands over the connected wireless terminal to the other adjacent wireless base station.

5. The wireless base station according to claim 4, wherein the reception unit receives the information regarding the reception quality at a timing when the handover condition between the adjacent wireless base stations or the handover condition for the adjacent wireless base station is changed.

6. The wireless base station according to any one of claims 1 to 5, further comprising:

a transmission unit that transmits the handover condition for the adjacent wireless base station to the other adjacent wireless base station.

7. A wireless base station comprising:

a storage unit that stores a handover condition for an adjacent wireless base station, which is a condition under which the wireless base station hands over a wireless terminal connected to the wireless base station to the adjacent wireless base station adjacent to the wireless base station; and
a transmission unit that transmits the handover condition for the adjacent wireless base station to another adjacent wireless base station adjacent to the wireless base station and the adjacent wireless base station.

8. A wireless communication system that includes at least a wireless base station, comprising:

a storage unit that stores a handover condition for an adjacent wireless base station, which is a condition under which the wireless base station hands over a wireless terminal connected to the wireless base station to the adjacent wireless base station adjacent to the wireless base station, and a handover condition between adjacent wireless base stations, which is a condition under which the adjacent wireless base station hands over a wireless terminal connected to the adjacent wireless base station to another adjacent wireless base station adjacent to the wireless base station and the adjacent wireless base station; and
a control unit that hands over a connected wireless terminal which is a wireless terminal connected to the wireless base station to the other adjacent wireless base station, when the control unit determines that the adjacent wireless base station hands over the connected wireless terminal to the other adjacent wireless base station based on the handover condition between the adjacent wireless base stations in the case that the control unit determines that the connected wireless terminal is handed over to the adjacent wireless base station based on the handover condition for the adjacent wireless base station.

9. The wireless communication system according to claim 8, wherein the handover conditions under which the wireless terminal is handed over include a weight in comparison between information regarding a reception quality of a wireless signal which the wireless terminal receives from a wireless base station serving as a handover source and information regarding a reception quality of a wireless signal which the wireless terminal receives from a wireless base station serving as a handover destination.

10. The wireless communication system according to claim 8 or 9, wherein the control unit hands over the connected wireless terminal to the adjacent wireless base station, when the control unit determines that the adjacent wireless base station does not hand over the connected wireless terminal to the other adjacent wireless base station based on the handover condition between the adjacent wireless base stations in the case that the control unit determines that the connected wireless terminal is handed over to the adjacent wireless base station based on the handover condition for the adjacent wireless base station.

11. The wireless communication system according to any one of claims 8 to 10, further comprising:

a reception unit that receives, from the connected wireless terminal, information regarding a reception quality of a wireless signal which the connected wireless terminal receives from each of the wireless base station, the adjacent wireless base station, and the other adjacent wireless base station,

wherein, based on the received information regarding the reception quality, the control unit determines that the connected wireless terminal is handed over to the adjacent wireless base station and determines that the adjacent wireless base station hands over the connected wireless terminal to the other adjacent wireless base station.

12. The wireless communication system according to claim 11, wherein the reception unit receives the information regarding the reception quality at a timing when the handover condition between the adjacent wireless base stations or the handover condition for the adjacent wireless base station is changed.

13. The wireless communication system according to any one of claims 8 to 12, further comprising:

a transmission unit that transmits the handover condition for the adjacent wireless base station to the other adjacent wireless base station.

14. A wireless communication system that includes at least a wireless base station, comprising:

a storage unit that stores a handover condition for an adjacent wireless base station, which is a condition under which the wireless base station hands over a wireless terminal connected to the wireless base station to the adjacent wireless base station adjacent to the wireless base station; and

a transmission unit that transmits the handover condition for the adjacent wireless base station to another adjacent wireless base station adjacent to the wireless base station and the adjacent wireless base station.

15. A method of controlling communication of a wireless communication system including at least a wireless base station, the method comprising:

storing a handover condition for an adjacent wireless base station, which is a condition under which the wireless base station hands over a wireless terminal connected to the wireless base station to the adjacent wireless base station adjacent to the wireless base station, and a handover condition between adjacent wireless base stations, which is a condition under which the adjacent wireless base station hands over a wireless terminal connected to the adjacent wireless base station to another adjacent wireless base station adjacent to the wireless base station and the adjacent wireless base station; and

handing over a connected wireless terminal which is a wireless terminal connected to the wireless base station to the other adjacent wireless base station, when it is determined that the adjacent wireless base station hands over the connected wireless terminal to the other adjacent wireless base station based on the handover condition between the adjacent wireless base stations in the case that it is determined that the connected wireless terminal is handed over to the adjacent wireless base station based on the handover condition for the adjacent wireless base station.

16. A method of controlling communication of a wireless communication system including at least a wireless base station, the method comprising:

storing a handover condition for an adjacent wireless base station, which is a condition under which the wireless base station hands over a wireless terminal connected to the wireless base station to the adjacent wireless base station adjacent to the wireless base station; and

transmitting the handover condition for the adjacent wireless base station to another adjacent wireless base station adjacent to the wireless base station and the adjacent wireless base station.

17. A wireless terminal comprising:

a wireless communication unit that performs wireless communication with a wireless base station to which the wireless terminal is connected; and

a control unit that performs handover to another adjacent wireless base station adjacent to the wireless base station and an adjacent wireless base station adjacent to the wireless base station, when the wireless base station, which stores a handover condition for the adjacent wireless base station which is a condition under which the wireless base station to which the wireless terminal is connected hands over a wireless terminal to the adjacent wireless base station and a handover condition between adjacent wireless base stations which is a condition under which the adjacent wireless base station hands over a wireless terminal connected to the adjacent wireless base station to the other adjacent wireless base station, determines that the adjacent wireless base station hands over the wireless terminal connected to the wireless base station to the other adjacent wireless base station based on the handover condition between the adjacent wireless base stations in the case that the wireless base station determines to hand over the wireless terminal to the adjacent wireless base station based on the handover condition for the adjacent wireless  base station.

FIG. 1

EP 2 690 908 A1

# FIG. 2

RECEPTION POWER
OR RECEPTION QUALITY

200-1

200-2

HOmargin

MEASUREMENT REPORT

400

DISTANCE

EP 2 690 908 A1

FIG. 3

FIG. 4

# FIG. 5

EP 2 690 908 A1

## FIG. 6

WIRELESS TERMINAL 4

47 DATA GENERATION UNIT

48 TRANSMISSION UNIT

41

42 DUPLEXER

46 CONTROL UNIT

45 DATA PROCESSING UNIT

44 MEASUREMENT UNIT

43 RECEPTION UNIT

## FIG. 7

# FIG. 8

2
WIRELESS
BASE
STATION

4
WIRELESS
TERMINAL

S10

RRC Connection Reconfiguration

(Measurement Report configuration)

# FIG. 9

**MeasObjectMod**

| PARAMETER | DESCRIPTION |
|---|---|
| measObjectID | ID OF MEASUREMENT TARGET |
| CellsModList | LIST OF CellsMod |

**ReportConfigMod**

| PARAMETER | DESCRIPTION |
|---|---|
| reportConfigID | ID OF REPORT SETTING |
| triggerQuantity | DESIGNATION WHETHER NOTIFICATION CONDITION IS RECEPTION POWER OR RECEPTION QUALITY 0:RECEPTION POWER, 1:RECEPTION QUALITY |
| reportQuantity | DESIGNATION OF NOTIFICATION INFORMATION (SAME AS triggerQuantity OR BOTH) 0: SAME AS triggerQuantity, 1: BOTH RECEPTION POWER/RECEPTION QUALITY |

**MeasIDMod**

| PARAMETER | DESCRIPTION |
|---|---|
| measID | ID OF MEASUREMENT |
| measObjectID | ID OF MEASUREMENT TARGET |
| reportConfigID | ID OF REPORT SETTING |

**CellsMod**

| PARAMETER | DESCRIPTION |
|---|---|
| cellID | ID OF CELL OF MEASUREMENT TARGET |
| HO margin | HO margin OF TARGET CELL |

EP 2 690 908 A1

FIG. 10

## FIG. 11

**MeasIDMod**

| PARAMETER | VALUE |
|---|---|
| measID | 1 |
| measObjectID | 1 |
| reportConfigID | 1 |

**MeasObjectMod**

| PARAMETER | VALUE |
|---|---|
| measObjectID | 1 |
| CellsModList | |

**ReportConfigMod**

| PARAMETER | VALUE |
|---|---|
| reportConfigID | 1 |
| triggerQuantity | 0 or 1 |
| reportQuantity | 0 or 1 |

**CellsMod**

| PARAMETER | VALUE |
|---|---|
| cellID | B |
| HO margin | HmB |

**CellsMod**

| PARAMETER | VALUE |
|---|---|
| cellID | C |
| HO margin | HmC |

EP 2 690 908 A1

# FIG. 12

START

↓

MEASURE RECEPTION POWER AND/
OR RECEPTION QUALITY (Ms)
OF SERVING CELL (CELL A)  — S20

↓

MEASURE RECEPTION POWER AND/
OR RECEPTION QUALITY (MnB, MnC) OF
ADJACENT CELL (CELL B AND CELL C)  — S21

↓

IS "MnB > Ms + HmB" IN CELL B OR
"MnC > Ms + HmC" IN CELL C SATISFIED?  — S22

No →

Yes
↓

TRANSMIT MEASUREMENT REPORT
TO WIRELESS BASE STATION 2-1
PROVIDING CELL A  — S23

↓

END

## FIG. 13

| MeasResults | | |
|---|---|---|
| | **PARAMETER** | **DESCRIPTION** |
| | measID | ID OF MEASUREMENT TARGET |
| | measResultServCell | INFORMATION REGARDING SERVING CELL |
| | measResultNeighCells | LIST OF measResultNeighCell |

| measResultServCell | | |
|---|---|---|
| | **PARAMETER** | **DESCRIPTION** |
| | rsrpResult | RECEPTION POWER OF SERVING CELL |
| | rsrqResult | RECEPTION QUALITY OF SERVING CELL |

| measResultNeighCell | | |
|---|---|---|
| | **PARAMETER** | **DESCRIPTION** |
| | phyCellId | ID OF ADJACENT CELL |
| | rsrpResult | RECEPTION POWER OF ADJACENT CELL |
| | rsrqResult | RECEPTION QUALITY OF ADJACENT CELL |

EP 2 690 908 A1

# FIG. 14

EP 2 690 908 A1

| Serving Cell | Target Cell | HO margin |
|---|---|---|
| A | B | H1(=HmB) |
| A | C | H2(=HmC) |
| B | C | H3 |
| C | B | H4 |

EP 2 690 908 A1

## FIG. 16

WIRELESS BASE STATION 2-2

WIRELESS BASE STATION 2-3

WIRELESS BASE STATION 2-1

S50
Mobility Change Request

S51
Mobility Change Acknowledge

S52
Mobility Change Request

S53
Mobility Change Acknowledge

EP 2 690 908 A1

## FIG. 17

| Change Request | | |
|---|---|---|
| | PARAMETER | DESCRIPTION |
| | Cell ID2 | ID OF CELL FORMED BY WIRELESS BASE STATION OF TRANSMISSION SOURCE |
| | Cell ID1 | ID OF CELL FORMED BY WIRELESS BASE STATION OF RECEPTION DESTINATION |
| | HO trigger change1 | VALUE OF HOmargin FROM CELL WITH Cell ID2 TO CELL WITH Cell ID1 OR DIFFERENCE VALUE |
| | HO trigger change2 | VALUE OF HOmargin FROM CELL WITH Cell ID1 TO CELL WITH Cell ID2 OR DIFFERENCE VALUE |
| Change Notification | | |
| | PARAMETER | DESCRIPTION |
| | Cell ID2 | ID OF CELL FORMED BY WIRELESS BASE STATION OF TRANSMISSION SOURCE |
| | Cell ID3 | ID OF CELL ADJACENT TO CELL FORMED BY WIRELESS BASE STATION OF TRANSMISSION SOURCE |
| | HO trigger change3 | VALUE OF HOmargin FROM CELL WITH Cell ID2 TO CELL WITH Cell ID3 OR DIFFERENCE VALUE |
| | HO trigger change4 | VALUE OF HOmargin FROM CELL WITH Cell ID3 TO CELL WITH Cell ID2 OR DIFFERENCE VALUE |

EP 2 690 908 A1

# FIG. 18

START

DETECT THAT LOAD IS GREATER THAN
PREDETERMINED THRESHOLD VALUE    S60

ACQUIRE LOADS OF ADJACENT CELL A
AND ADJACENT CELL C    S61

CALCULATE HOmargin TO ADJACENT CELL
AND HOmargin FROM ADJACENT CELL    S62

SORT ADJACENT CELLS IN ORDER OF
INCREASING HOmargin    S63

TRANSMIT Mobility Change Request IN
SORTED ORDER (UPDATED VALUES OF
HOmargin OF CELL A AND CELL C OR
HOmargin DIFFERENCE VALUE IS
INCLUDED)    S64

END

# FIG. 19

START

S40
MnB > Ms + H1 IN CELL B? — No
Yes

S41
MnC > Ms + H2 IN CELL C? — No
Yes

S42
MnC > Ms + H2 IN CELL C? — No
Yes

S43
MnB > MnC? — No
Yes

S44
SET CELL B AS CANDIDATE OF TARGET CELL

S45
SET CELL C AS CANDIDATE OF TARGET CELL

S46
MnC > MnB + H3? — No
Yes

S47
MnB > MnC + H4? — No
Yes

S48
DETERMINE CELL C AS TARGET CELL

S49
DETERMINE CELL B AS TARGET CELL

END

# FIG. 20

WIRELESS TERMINAL

49 WIRELESS IF

52 LOGIC CIRCUIT

50 PROCESSOR

53 INPUT IF

51 MEMORY

54 OUTPUT IF

4

EP 2 690 908 A1

## FIG. 21

WIRELESS BASE STATION — 2

- WIRELESS IF (34)
- PROCESSOR (35)
- MEMORY (36)
- LOGIC CIRCUIT (37)
- WIRED IF (38)

<table>
<tr><td colspan="2" align="center">**INTERNATIONAL SEARCH REPORT**</td><td colspan="2">International application No.<br>PCT/JP2011/056739</td></tr>
</table>

| | |
|---|---|
| A. CLASSIFICATION OF SUBJECT MATTER<br>*H04W36/30*(2009.01)i, *H04W36/22*(2009.01)i, *H04W92/20*(2009.01)i |

According to International Patent Classification (IPC) or to both national classification and IPC

B. FIELDS SEARCHED

Minimum documentation searched (classification system followed by classification symbols)
H04W36/30, H04W36/22, H04W92/20

Documentation searched other than minimum documentation to the extent that such documents are included in the fields searched

| Jitsuyo Shinan Koho | 1922–1996 | Jitsuyo Shinan Toroku Koho | 1996–2011 |
|---|---|---|---|
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-536874 A (LG Electronics Inc.),<br>13 December 2007 (13.12.2007),<br>entire text; all drawings<br>& US 2005/0272403 A1 & EP 1747698 A<br>& KR 10-2005-0107667 A & CA 2564891 A | 1-17 |
| A | JP 2010-16494 A (NTT Docomo Inc.),<br>21 January 2010 (21.01.2010),<br>entire text; all drawings<br>& WO 2010/001798 A1 | 1-17 |
| X | JP 2010-226602 A (Fujitsu Ltd.),<br>07 October 2010 (07.10.2010),<br>abstract; claims 1, 4; paragraphs [0013] to<br>[0021]; fig. 1, 2<br>(Family: none) | 7,14,16 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 June, 2011 (14.06.11) | Date of mailing of the international search report<br>28 June, 2011 (28.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 690 908 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001078242 A
- JP 2007318361 A
- JP 2002503435 A
- JP 6350515 A